# EUROPEAN PATENT SPECIFICATION

(11) **EP 3 596 727 B1**
(45) Date of publication and mention of the grant of the patent: **13.04.2022**
(21) Application number: 18723309.3
(22) Date of filing: 24.04.2018
(51) Int. Cl.: G10L 15/22, G10L 15/06, G10L 15/18, H04M 3/493, G06F 3/16, G06F 40/30, G06F 40/35

(54) **OPTIMIZING DIALOGUE POLICY DECISIONS FOR DIGITAL ASSISTANTS USING IMPLICIT FEEDBACK**
OPTIMIERUNG VON DIALOG-POLICY-ENTSCHEIDUNGEN FÜR DIGITALE ASSISTENTEN UNTER VERWENDUNG IMPLIZITEN FEEDBACKS
OPTIMISATION DE DÉCISIONS DE POLITIQUE DE DIALOGUE POUR ASSISTANTS NUMÉRIQUES UTILISANT UN RETOUR IMPLICITE

(30) Priority: 15.05.2017 US 201762506465 P; 01.06.2017 DK PA201770431; 15.08.2017 US 201715678059
(43) Date of publication of application: 22.01.2020
(73) Proprietor: Apple Inc., Cupertino, CA 95014 (US)
(72) Inventor: THOMSON, Blaise, Cupertino, California 95014 (US); VANDYKE, David J., Cupertino, California 95014 (US); FRAZZINGARO, Gennaro, Cupertino, California 95014 (US); FRIAS DELGADO, Silvia, Cupertino, California 95014 (US); GUNTER, Thomas, Cupertino, California 95014 (US); VOICE, Thomas David, Cupertino, California 95014 (US); HELGASON, Thorvaldur Pall, Cupertino, California 95014 (US); YOUNG, Stephen J., Cupertino, California 95014 (US); Ó SÉAGHDHA, Diarmuid, Cupertino, California 95014 (US); KAPLAN, Dain, Cupertino, California 95014 (US)
(74) Representative: Zacco Denmark A/S
(86) International application number: PCT/US2018/029034
(87) International publication number: WO 2018/212941

(56) References cited:
- WO-A1-2018/044633
- US-A1- 2007 106 497
- US-A1- 2014 278 413
- US-A1- 2016 322 050
- XU YUHONG ET AL: "Policy optimization of dialogue management in spoken dialogue system for out-of-domain utterances", 2016 INTERNATIONAL CONFERENCE ON ASIAN LANGUAGE PROCESSING (IALP), IEEE, 21 November 2016 (2016-11-21), pages 10-13, XP033075456, DOI: 10.1109/IALP.2016.7875923 [retrieved on 2017-03-10]
- S Young ET AL: "POMDP-Based Statistical Spoken Dialog Systems: A Review", Proceedings of the IEEE, 1 May 2013 (2013-05-01), pages 1160-1179, XP055541957, New York DOI: 10.1109/JPROC.2012.2225812 Retrieved from the Internet: URL:http://mi.eng.cam.ac.uk/~sjy/papers/yg tw13.pdf

## Description

This application claims priority to U.S. Application Serial No. 62/506,465, entitled "OPTIMIZING DIALOGUE POLICY DECISIONS FOR DIGITAL ASSISTANTS USING IMPLICIT FEEDBACK," filed on May 15, 2017; Danish Application No. PA201770431, entitled "OPTIMIZING DIALOGUE POLICY DECISIONS FOR DIGITAL ASSISTANTS USING IMPLICIT FEEDBACK," filed on June 1, 2017; and U.S. Application Serial No. 15/678,059, entitled "OPTIMIZING DIALOGUE POLICY DECISIONS FOR DIGITAL ASSISTANTS USING IMPLICIT FEEDBACK, filed on August 15, 2017.

### FIELD

This relates generally to digital assistants and, more specifically, to optimizing dialogue policy decisions for digital assistants using implicit feedback.

### BACKGROUND

Intelligent automated assistants (or digital assistants) can provide a beneficial interface between human users and electronic devices. Such assistants can allow users to interact with devices or systems using natural language in spoken and/or text forms. For example, a user can provide an utterance containing a user request to a digital assistant operating on an electronic device. The digital assistant can interpret the user's intent from the utterance and operationalize the user's intent into tasks. The tasks can then be performed by executing one or more services of the electronic device, and a relevant output responsive to the user request can be returned to the user.

The specific tasks or actions that a digital assistant decides to perform in response to a user's natural language input can be based on the policy models implemented by the digital assistant. In particular, the policy models can apply a policy that determines the appropriate policy action to take given the current dialogue state (also referred to as the belief state). The policy action can include a set of one or more tasks or actions. In some conventional digital assistant systems, the policy that is applied in its policy models can include a set of hand-crafted rules. However, developing such a policy can be time-consuming and inefficient. Moreover, such a policy does not scale well as its size and complexity increases to cover different dialogue scenarios and user applications.

US2014/0278413 discloses an electronic device with one or more processors and memory and includes a procedure for training a digital assistant. In some embodiments, the device detects an impasse in a dialogue between the digital assistant and a user including a speech input. During a learning session, the device utilizes a subsequent clarification input from the user to adjust intent inference or task execution associated with the speech input to produce a satisfactory response. In some embodiments, the device identifies a pattern of success or failure associated with an aspect previously used to complete a task and generates a hypothesis regarding a parameter used in speech recognition, intent inference or task execution as a cause for the pattern. Then, the device tests the hypothesis by altering the parameter for a subsequent completion of the task and adopts or rejects the hypothesis based on feedback information collected from the subsequent completion.

Xu Y et al, "Policy optimization of dialogue management in spoken dialogue system for out-of-domain utterances", 2016 International Conference on Asian Language Processing (IALP), pages 10-13, XP033075456, discloses policy optimization of a dialogue management scheme based on partially observable Markov decision processes (POMDP), which is designed for out-of-domain (OOD) utterances processing in spoken dialogue system, wherein value iteration method of reinforcement learning framework is employed to optimize the dialogue policy.

US 2007/0106497 A1 discloses a "Natural Language Script Interface" (NLSI) which provides an interface and query system for automatically interpreting natural language inputs to select, execute, and/ or otherwise present one or more scripts or other code to the user for further user interaction.

WO 2018/044633 A1 describes systems, methods, and techniques by which a processing unit can build an end-to-end dialogue agent model for end-to-end learning of dialogue agents for information access and apply the end-to-end dialogue agent model with soft attention over knowledge base entries to make the dialogue system differentiable. In various examples the processing unit can apply the end-to-end dialogue agent model to a source of input, fill slots for output from the knowledge base entries, induce a posterior distribution over the entities in a knowledge base or induce a posterior distribution of a target of the requesting user over entities from a knowledge base, develop an end-to-end differentiable model of a dialogue agent, use supervised and/or imitation learning to initialize network parameters, calculate a modified version of an episodic algorithm, e.g., the REINFORCE algorithm, for training an end-to-end differentiable model based on user feedback.

Young S et al, "POMDP-based Statistical Spoken Dialogue Systems: a Review", Proc. IEEE, vol. 101, no. 5, pages 1160-1179, 2013, XP055541957, provides an overview of the current state of the art in the development of POMDP-based spoken dialogue systems.

### SUMMARY

The present invention is defined by the subject-matter of the independent claims. One aspect of the present invention is a method as defined in independent claim 1. Other aspects of the invention are a computer readable storage medium and an electronic device as defined in claims 14 and 15, respectively. Further aspects of the invention are the subject of the dependent claims. The scope of present invention is defined by the claims.

Systems and processes for optimizing dialogue policy decisions for digital assistants using implicit feedback are provided. In an example process, a user utterance is received. Based on a text representation of the user utterance, one or more user intents corresponding to the user utterance are determined. A belief state for the one or more user intents is determined. The belief state corresponds to a plurality of candidate policy actions. Based on the belief state and a policy model, a policy action is selected from the plurality of candidate policy actions. The policy action is performed. Performing the policy action includes outputting results of the policy action for presentation. A success score for the policy action is determined based on whether one of a plurality of types of user input is detected after performing the policy action. The plurality of types of user input are each a type of user input other than a response to a structured device query. A set of parameter values of the policy model is modified using the determined success score.

Determining a belief state for the one or more user intents can provide an internal representation of the one or more user intents that includes past and current observations as well as uncertainties for each of the user intents. The belief state can enable the policy action to be selected using a larger and more comprehensive knowledge base, which can improve the accuracy of the selection process. As a result, the operability of the electronic device can be enhanced by allowing for better interpretation of speech and other forms of natural language inputs. Specifically, the electronic device can be able to operate with greater accuracy and reliability when identifying and performing tasks in response to user requests.

Determining a success score for the policy action based on implicit user feedback (e.g., detecting one of a plurality of types of user input that are each other than a response to a structured device query) can enable the accuracy of the policy model to be evaluated objectively. Specifically, in contrast to explicit user feedback, implicit user feedback can be a more reliable and accurate indicia of whether the performed policy action satisfies the user's actual desired goal for providing the user utterance. Thus, using a success score that is determined based on implicit user feedback to update the policy model can result in the policy model being optimized more accurately, which enables the policy model to select policy actions that better reflect the user's desired goals for subsequently received user utterances. This can enhance the operability of the electronic device by allowing for better interpretation of speech and other forms of natural language inputs. Specifically, the electronic device can operate with greater accuracy and reliability when identifying and performing tasks in response to user requests.

Executable instructions for performing these functions are, optionally, included in a non-transitory computer-readable storage medium or other computer-program product configured for execution by one or more processors. Executable instructions for performing these functions are, optionally, included in a transitory computer-readable storage medium or other computer program product configured for execution by one or more processors.

### BRIEF DESCRIPTION OF THE DRAWINGS

FIG. 1 is a block diagram illustrating a system and environment for implementing a digital assistant, according to various examples.
FIG. 2A is a block diagram illustrating a portable multifunction device implementing the client-side portion of a digital assistant, according to various examples.
FIG. 2B is a block diagram illustrating exemplary components for event handling, according to various examples.
FIG. 3 illustrates a portable multifunction device implementing the client-side portion of a digital assistant, according to various examples.
FIG. 4 is a block diagram of an exemplary multifunction device with a display and a touch-sensitive surface, according to various examples.
FIG. 5A illustrates an exemplary user interface for a menu of applications on a portable multifunction device, according to various examples.
FIG. 5B illustrates an exemplary user interface for a multifunction device with a touch-sensitive surface that is separate from the display, according to various examples.
FIG. 6A illustrates a personal electronic device, according to various examples.
FIG. 6B is a block diagram illustrating a personal electronic device, according to various examples.
FIG. 7A is a block diagram illustrating a digital assistant system or a server portion thereof, according to various examples.
FIG. 7B illustrates the functions of the digital assistant shown in FIG. 7A, according to various examples.
FIG. 7C illustrates a portion of an ontology, according to various examples.
FIG. 8 illustrates a portion of a belief state, according to various examples.
FIG. 9 illustrates an exemplary block diagram of a model optimization module, according to various examples.
FIG. 10 illustrates a process for optimizing dialogue policy decisions for digital assistants using implicit feedback, according to various examples.

### DETAILED DESCRIPTION

In the following description of examples, reference is made to the accompanying drawings in which are shown by way of illustration specific examples that can be practiced. It is to be understood that other examples can be used and structural changes can be made without departing from the scope of the various examples.

As discussed above, policy models of digital assistants can rely on hand-crafted rules that are time-consuming and inefficient to develop. Such policy models do not scale well and can result in policy decisions that are inconsistent and inaccurate. As described in greater detail below, unsupervised machine learning techniques can be applied to optimize the policy models implemented by digital assistants. Specifically, reinforcement learning techniques can be implemented where user feedback indicating the success or failure of a determined policy action is utilized to optimize the policy model. The user feedback can be used to optimize a reward function of the policy model such that for subsequent user utterances, the policy action that maximizes the cumulative reward would be more likely to coincide with the user's actual desired goal. In this way, an optimal policy can be developed for the policy models of the digital assistant.

In some implementations, explicit user feedback is used to optimize the policy model of the digital assistant. Explicit user feedback refers to feedback that expressly specifies whether the user is satisfied or dissatisfied with the determined policy action. For example, after a digital assistant selects and performs a policy action, the digital assistant can prompt the user regarding whether the performed policy action satisfied his/her desired goal. The response that the user provides to such a structured prompt would be explicit user feedback. However, in many cases, explicit user feedback can be unreliable and thus optimizing the policy model of a digital assistant using explicit user feedback can yield inaccurate results. This can be because certain users, when solicited to provide feedback, become unconsciously biased and provide overly positive or negative feedback. For example, some users may have unrealistic expectations of the digital assistant where even though the "correct" policy action was selected by the policy model, the users would still provide negative feedback. In other examples, users may be inclined to be accommodating or agreeable when solicited to provide feedback. In these examples, the users would provide positive feedback even though the performed policy action may not have satisfied their desired goal.

In accordance with some techniques described herein, dialogue policy decisions for digital assistants can be optimized using implicit feedback. Specifically, implicit user feedback (e.g., rather than explicit user feedback) can be used to optimize the policy model of a digital assistant. Implicit user feedback was found to yield more robust and accurate results compared to explicit feedback when used to optimize policy models. This was an unexpected result. In particular, implicit user feedback was found to be more objective, where the feedback more accurately reflected whether a policy action selected by the policy model coincided with the user's desired goal. One example of implicit user feedback includes detecting user interaction with a user interface of the digital assistant system within a predetermined duration after the selected policy action is performed. For example, within a predetermined duration after the selected policy action is performed, the user may press the "home" button on the device or provide user input that invokes the digital assistant. Such implicit user feedback can be interpreted to indicate that the user is not satisfied with the performed policy action. Another example of implicit user feedback includes detecting user input that causes a parameter that was set during the performance of the policy action to change. Specifically, if the performed policy action creates a calendar event at 5pm, which includes setting the "start time" parameter of the calendar event to "5pm," detecting user input that causes the "start time" parameter to change from "5pm" to "3pm" can be implicit user feedback indicating that the user is not satisfied with the performed policy action. Such implicit user feedback can be used to optimize the policy models (e.g., using reinforcement learning).

In an example process for optimizing dialogue policy decisions for digital assistants using implicit feedback, a user utterance is received. Based on a text representation of the user utterance, one or more user intents corresponding to the user utterance are determined. A belief state for the one or more user intents is determined. The belief state corresponds to a plurality of candidate policy actions. Based on the belief state and a policy model, a policy action is selected from the plurality of candidate policy actions. The policy action is performed. Performing the policy action includes outputting results of the policy action for presentation. A success score for the policy action is determined based on whether one of a plurality of types of user input is detected after performing the policy action. The plurality of types of user input are each a type of user input other than a response to a structured device query. A set of parameter values of the policy model is modified using the determined success score.

Although the following description uses terms "first," "second," etc. to describe various elements, these elements should not be limited by the terms. These terms are only used to distinguish one element from another. For example, a first input could be termed a second input, and, similarly, a second input could be termed a first input, without departing from the scope of the various described examples. The first input and the second input are both inputs and, in some cases, are separate and different inputs.

The terminology used in the description of the various described examples herein is for the purpose of describing particular examples only and is not intended to be limiting. As used in the description of the various described examples and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

### 1. System and Environment

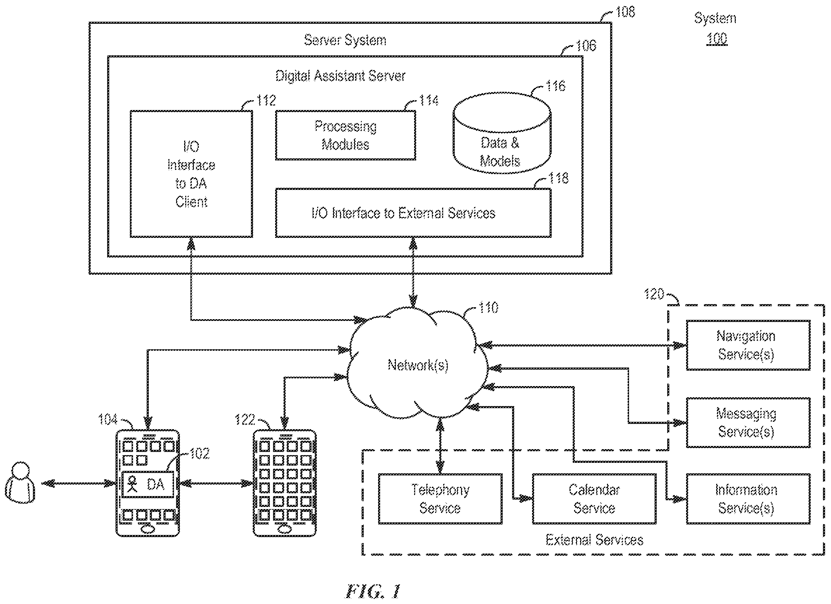

FIG. 1 illustrates a block diagram of system 100 according to various examples. In some examples, system 100 implements a digital assistant. The terms "digital assistant," "virtual assistant," "intelligent automated assistant," or "automatic digital assistant" refer to any information processing system that interprets natural language input in spoken and/or textual form to infer user intent, and performs actions based on the inferred user intent. For example, to act on an inferred user intent, the system performs one or more of the following: identifying a task flow with steps and parameters designed to accomplish the inferred user intent, inputting specific requirements from the inferred user intent into the task flow; executing the task flow by invoking programs, methods, services, APIs, or the like; and generating output responses to the user in an audible (e.g., speech) and/or visual form.

Specifically, a digital assistant is capable of accepting a user request at least partially in the form of a natural language command, request, statement, narrative, and/or inquiry. Typically, the user request seeks either an informational answer or performance of a task by the digital assistant. A satisfactory response to the user request includes a provision of the requested informational answer, a performance of the requested task, or a combination of the two. For example, a user asks the digital assistant a question, such as "Where am I right now?" Based on the user's current location, the digital assistant answers, "You are in Central Park near the west gate." The user also requests the performance of a task, for example, "Please invite my friends to my girlfriend's birthday party next week." In response, the digital assistant can acknowledge the request by saying "Yes, right away," and then send a suitable calendar invite on behalf of the user to each of the user's friends listed in the user's electronic address book. During performance of a requested task, the digital assistant sometimes interacts with the user in a continuous dialogue involving multiple exchanges of information over an extended period of time. There are numerous other ways of interacting with a digital assistant to request information or performance of various tasks. In addition to providing verbal responses and taking programmed actions, the digital assistant also provides responses in other visual or audio forms, e.g., as text, alerts, music, videos, animations, etc.

As shown in FIG. 1, in some examples, a digital assistant is implemented according to a client-server model. The digital assistant includes client-side portion 102 (hereafter "DA client 102") executed on user device 104 and server-side portion 106 (hereafter "DA server 106") executed on server system 108. DA client 102 communicates with DA server 106 through one or more networks 110. DA client 102 provides client-side functionalities such as user-facing input and output processing and communication with DA server 106. DA server 106 provides server-side functionalities for any number of DA clients 102 each residing on a respective user device 104.

In some examples, DA server 106 includes client-facing I/O interface 112, one or more processing modules 114, data and models 116, and I/O interface to external services 118. The client-facing I/O interface 112 facilitates the client-facing input and output processing for DA server 106. One or more processing modules 114 utilize data and models 116 to process speech input and determine the user's intent based on natural language input. Further, one or more processing modules 114 perform task execution based on inferred user intent. In some examples, DA server 106 communicates with external services 120 through network(s) 110 for task completion or information acquisition. I/O interface to external services 118 facilitates such communications.

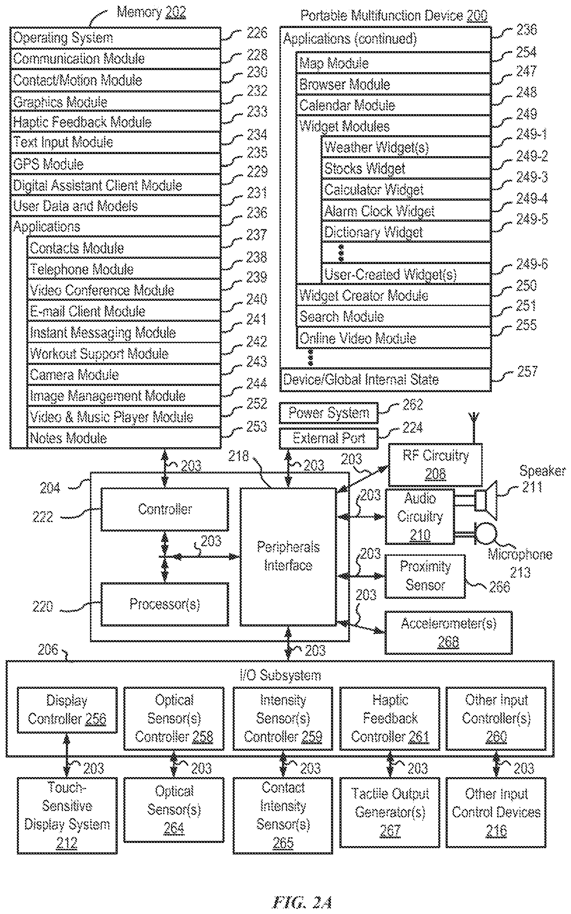

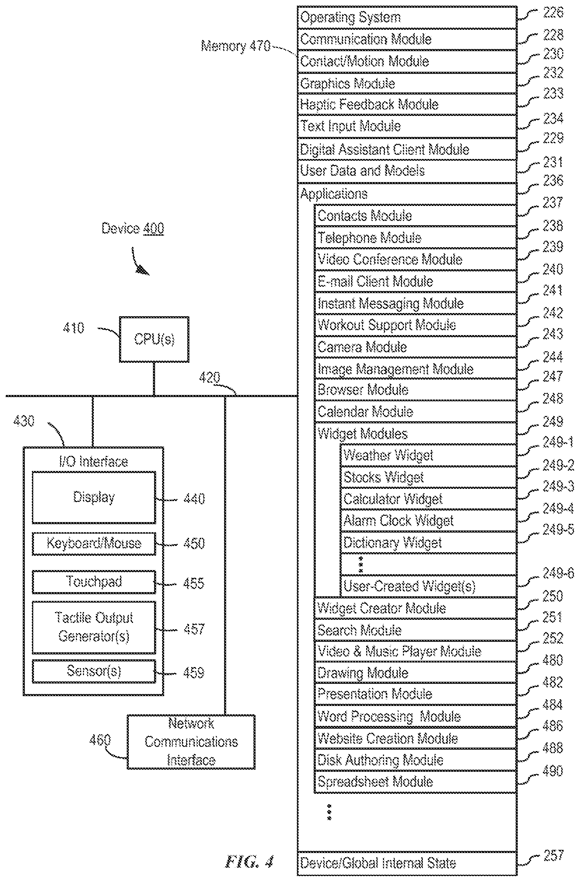

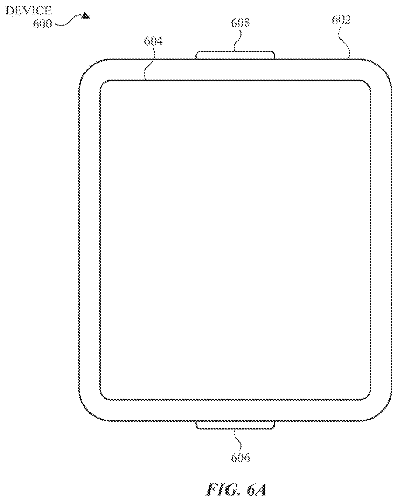

User device 104 can be any suitable electronic device. In some examples, user device is a portable multifunctional device (e.g., device 200, described below with reference to FIG. 2A), a multifunctional device (e.g., device 400, described below with reference to FIG. 4), or a personal electronic device (e.g., device 600, described below with reference to FIG. 6A-B.) A portable multifunctional device is, for example, a mobile telephone that also contains other functions, such as PDA and/or music player functions. Specific examples of portable multifunction devices include the iPhone^{®}, iPod Touch^{®}, and iPad^{®} devices from Apple Inc. of Cupertino, California. Other examples of portable multifunction devices include, without limitation, laptop or tablet computers. Further, in some examples, user device 104 is a non-portable multifunctional device. In particular, user device 104 is a desktop computer, a game console, a television, or a television set-top box. In some examples, user device 104 includes a touch-sensitive surface (e.g., touch screen displays and/or touchpads). Further, user device 104 optionally includes one or more other physical user-interface devices, such as a physical keyboard, a mouse, and/or a joystick. Various examples of electronic devices, such as multifunctional devices, are described below in greater detail.

Examples of communication network(s) 110 include local area networks (LAN) and wide area networks (WAN), e.g., the Internet. Communication network(s) 110 is implemented using any known network protocol, including various wired or wireless protocols, such as, for example, Ethernet, Universal Serial Bus (USB), FIREWIRE, Global System for Mobile Communications (GSM), Enhanced Data GSM Environment (EDGE), code division multiple access (CDMA), time division multiple access (TDMA), Bluetooth, Wi-Fi, voice over Internet Protocol (VoIP), Wi-MAX, or any other suitable communication protocol.

Server system 108 is implemented on one or more standalone data processing apparatus or a distributed network of computers. In some examples, server system 108 also employs various virtual devices and/or services of third-party service providers (e.g., third-party cloud service providers) to provide the underlying computing resources and/or infrastructure resources of server system 108.

In some examples, user device 104 communicates with DA server 106 via second user device 122. Second user device 122 is similar or identical to user device 104. For example, second user device 122 is similar to devices 200, 400, or 600 described below with reference to FIGS. 2A, 4, and 6A-B. User device 104 is configured to communicatively couple to second user device 122 via a direct communication connection, such as Bluetooth, NFC, BTLE, or the like, or via a wired or wireless network, such as a local Wi-Fi network. In some examples, second user device 122 is configured to act as a proxy between user device 104 and DA server 106. For example, DA client 102 of user device 104 is configured to transmit information (e.g., a user request received at user device 104) to DA server 106 via second user device 122. DA server 106 processes the information and return relevant data (e.g., data content responsive to the user request) to user device 104 via second user device 122.

In some examples, user device 104 is configured to communicate abbreviated requests for data to second user device 122 to reduce the amount of information transmitted from user device 104. Second user device 122 is configured to determine supplemental information to add to the abbreviated request to generate a complete request to transmit to DA server 106. This system architecture can advantageously allow user device 104 having limited communication capabilities and/or limited battery power (e.g., a watch or a similar compact electronic device) to access services provided by DA server 106 by using second user device 122, having greater communication capabilities and/or battery power (e.g., a mobile phone, laptop computer, tablet computer, or the like), as a proxy to DA server 106. While only two user devices 104 and 122 are shown in FIG. 1, it should be appreciated that system 100, in some examples, includes any number and type of user devices configured in this proxy configuration to communicate with DA server system 106.

Although the digital assistant shown in FIG. 1 includes both a client-side portion (e.g., DA client 102) and a server-side portion (e.g., DA server 106), in some examples, the functions of a digital assistant are implemented as a standalone application installed on a user device. In addition, the divisions of functionalities between the client and server portions of the digital assistant can vary in different implementations. For instance, in some examples, the DA client is a thin-client that provides only user-facing input and output processing functions, and delegates all other functionalities of the digital assistant to a backend server.

### 2. Electronic Devices

Attention is now directed toward embodiments of electronic devices for implementing the client-side portion of a digital assistant. FIG. 2A is a block diagram illustrating portable multifunction device 200 with touch-sensitive display system 212 in accordance with some embodiments. Touch-sensitive display 212 is sometimes called a "touch screen" for convenience and is sometimes known as or called a "touch-sensitive display system." Device 200 includes memory 202 (which optionally includes one or more computer-readable storage mediums), memory controller 222, one or more processing units (CPUs) 220, peripherals interface 218, RF circuitry 208, audio circuitry 210, speaker 211, microphone 213, input/output (I/O) subsystem 206, other input control devices 216, and external port 224. Device 200 optionally includes one or more optical sensors 264. Device 200 optionally includes one or more contact intensity sensors 265 for detecting intensity of contacts on device 200 (e.g., a touch-sensitive surface such as touch-sensitive display system 212 of device 200). Device 200 optionally includes one or more tactile output generators 267 for generating tactile outputs on device 200 (e.g., generating tactile outputs on a touch-sensitive surface such as touch-sensitive display system 212 of device 200 or touchpad 455 of device 400). These components optionally communicate over one or more communication buses or signal lines 203.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 200 is only one example of a portable multifunction device, and that device 200 optionally has more or fewer components than shown, optionally combines two or more components, or optionally has a different configuration or arrangement of the components. The various components shown in FIG. 2A are implemented in hardware, software, or a combination of both hardware and software, including one or more signal processing and/or application-specific integrated circuits.

Memory 202 includes one or more computer-readable storage mediums. The computer-readable storage mediums are, for example, tangible and non-transitory. Memory 202 includes high-speed random access memory and also includes non-volatile memory, such as one or more magnetic disk storage devices, flash memory devices, or other non-volatile solid-state memory devices. Memory controller 222 controls access to memory 202 by other components of device 200.

In some examples, a non-transitory computer-readable storage medium of memory 202 is used to store instructions (e.g., for performing aspects of processes described below) for use by or in connection with an instruction execution system, apparatus, or device, such as a computer-based system, processor-containing system, or other system that can fetch the instructions from the instruction execution system, apparatus, or device and execute the instructions. In other examples, the instructions (e.g., for performing aspects of the processes described below) are stored on a non-transitory computer-readable storage medium (not shown) of the server system 108 or are divided between the non-transitory computer-readable storage medium of memory 202 and the non-transitory computer-readable storage medium of server system 108.

Peripherals interface 218 is used to couple input and output peripherals of the device to CPU 220 and memory 202. The one or more processors 220 run or execute various software programs and/or sets of instructions stored in memory 202 to perform various functions for device 200 and to process data. In some embodiments, peripherals interface 218, CPU 220, and memory controller 222 are implemented on a single chip, such as chip 204. In some other embodiments, they are implemented on separate chips.

RF (radio frequency) circuitry 208 receives and sends RF signals, also called electromagnetic signals. RF circuitry 208 converts electrical signals to/from electromagnetic signals and communicates with communications networks and other communications devices via the electromagnetic signals. RF circuitry 208 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 208 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 208 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11 n, and/or IEEE 802.11ac), voice over Internet Protocol (VoIP), Wi-MAX, a protocol for e mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

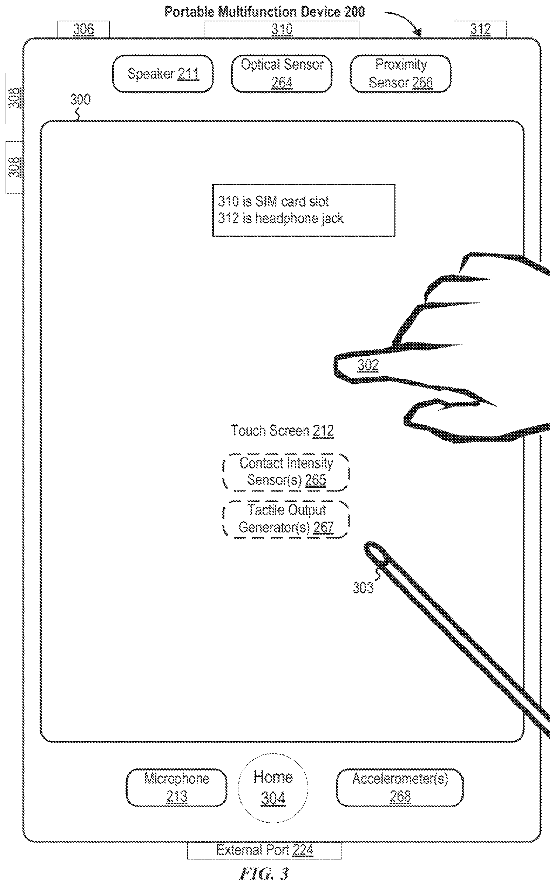

Audio circuitry 210, speaker 211, and microphone 213 provide an audio interface between a user and device 200. Audio circuitry 210 receives audio data from peripherals interface 218, converts the audio data to an electrical signal, and transmits the electrical signal to speaker 211. Speaker 211 converts the electrical signal to human-audible sound waves. Audio circuitry 210 also receives electrical signals converted by microphone 213 from sound waves. Audio circuitry 210 converts the electrical signal to audio data and transmits the audio data to peripherals interface 218 for processing. Audio data are retrieved from and/or transmitted to memory 202 and/or RF circuitry 208 by peripherals interface 218. In some embodiments, audio circuitry 210 also includes a headset jack (e.g., 312, FIG. 3). The headset jack provides an interface between audio circuitry 210 and removable audio input/output peripherals, such as output-only headphones or a headset with both output (e.g., a headphone for one or both ears) and input (e.g., a microphone).

I/O subsystem 206 couples input/output peripherals on device 200, such as touch screen 212 and other input control devices 216, to peripherals interface 218. I/O subsystem 206 optionally includes display controller 256, optical sensor controller 258, intensity sensor controller 259, haptic feedback controller 261, and one or more input controllers 260 for other input or control devices. The one or more input controllers 260 receive/send electrical signals from/to other input control devices 216. The other input control devices 216 optionally include physical buttons (e.g., push buttons, rocker buttons, etc.), dials, slider switches, joysticks, click wheels, and so forth. In some alternate embodiments, input controller(s) 260 are, optionally, coupled to any (or none) of the following: a keyboard, an infrared port, a USB port, and a pointer device such as a mouse. The one or more buttons (e.g., 308, FIG. 3) optionally include an up/down button for volume control of speaker 211 and/or microphone 213. The one or more buttons optionally include a push button (e.g., 306, FIG. 3).

A quick press of the push button disengages a lock of touch screen 212 or begin a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849. A longer press of the push button (e.g., 306) turns power to device 200 on or off. The user is able to customize a functionality of one or more of the buttons. Touch screen 212 is used to implement virtual or soft buttons and one or more soft keyboards.

Touch-sensitive display 212 provides an input interface and an output interface between the device and a user. Display controller 256 receives and/or sends electrical signals from/to touch screen 212. Touch screen 212 displays visual output to the user. The visual output includes graphics, text, icons, video, and any combination thereof (collectively termed "graphics"). In some embodiments, some or all of the visual output correspond to user-interface objects.

Touch screen 212 has a touch-sensitive surface, sensor, or set of sensors that accepts input from the user based on haptic and/or tactile contact. Touch screen 212 and display controller 256 (along with any associated modules and/or sets of instructions in memory 202) detect contact (and any movement or breaking of the contact) on touch screen 212 and convert the detected contact into interaction with user-interface objects (e.g., one or more soft keys, icons, web pages, or images) that are displayed on touch screen 212. In an exemplary embodiment, a point of contact between touch screen 212 and the user corresponds to a finger of the user.

Touch screen 212 uses LCD (liquid crystal display) technology, LPD (light emitting polymer display) technology, or LED (light emitting diode) technology, although other display technologies may be used in other embodiments. Touch screen 212 and display controller 256 detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 212. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 212 is analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 212 displays visual output from device 200, whereas touch-sensitive touchpads do not provide visual output.

A touch-sensitive display in some embodiments of touch screen 212 is as described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 212 has, for example, a video resolution in excess of 100 dpi. In some embodiments, the touch screen has a video resolution of approximately 160 dpi. The user makes contact with touch screen 212 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 200 includes a touchpad (not shown) for activating or deactivating particular functions. In some embodiments, the touchpad is a touch-sensitive area of the device that, unlike the touch screen, does not display visual output. The touchpad is a touch-sensitive surface that is separate from touch screen 212 or an extension of the touch-sensitive surface formed by the touch screen.

Device 200 also includes power system 262 for powering the various components. Power system 262 includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 200 also includes one or more optical sensors 264. FIG. 2A shows an optical sensor coupled to optical sensor controller 258 in I/O subsystem 206. Optical sensor 264 includes charge-coupled device (CCD) or complementary metal-oxide semiconductor (CMOS) phototransistors. Optical sensor 264 receives light from the environment, projected through one or more lenses, and converts the light to data representing an image. In conjunction with imaging module 243 (also called a camera module), optical sensor 264 captures still images or video. In some embodiments, an optical sensor is located on the back of device 200, opposite touch screen display 212 on the front of the device so that the touch screen display is used as a viewfinder for still and/or video image acquisition. In some embodiments, an optical sensor is located on the front of the device so that the user's image is obtained for video conferencing while the user views the other video conference participants on the touch screen display. In some embodiments, the position of optical sensor 264 can be changed by the user (e.g., by rotating the lens and the sensor in the device housing) so that a single optical sensor 264 is used along with the touch screen display for both video conferencing and still and/or video image acquisition.

Device 200 optionally also includes one or more contact intensity sensors 265. FIG. 2A shows a contact intensity sensor coupled to intensity sensor controller 259 in I/O subsystem 206. Contact intensity sensor 265 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 265 receives contact intensity information (e.g., pressure information or a proxy for pressure information) from the environment. In some embodiments, at least one contact intensity sensor is collocated with, or proximate to, a touch-sensitive surface (e.g., touch-sensitive display system 212). In some embodiments, at least one contact intensity sensor is located on the back of device 200, opposite touch screen display 212, which is located on the front of device 200.

Device 200 also includes one or more proximity sensors 266. FIG. 2A shows proximity sensor 266 coupled to peripherals interface 218. Alternately, proximity sensor 266 is coupled to input controller 260 in I/O subsystem 206. Proximity sensor 266 is performed as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals,". In some embodiments, the proximity sensor turns off and disables touch screen 212 when the multifunction device is placed near the user's ear (e.g., when the user is making a phone call).

Device 200 optionally also includes one or more tactile output generators 267. FIG. 2A shows a tactile output generator coupled to haptic feedback controller 261 in I/O subsystem 206. Tactile output generator 267 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 265 receives tactile feedback generation instructions from haptic feedback module 233 and generates tactile outputs on device 200 that are capable of being sensed by a user of device 200. In some embodiments, at least one tactile output generator is collocated with, or proximate to, a touch-sensitive surface (e.g., touch-sensitive display system 212) and, optionally, generates a tactile output by moving the touch-sensitive surface vertically (e.g., in/out of a surface of device 200) or laterally (e.g., back and forth in the same plane as a surface of device 200). In some embodiments, at least one tactile output generator sensor is located on the back of device 200, opposite touch screen display 212, which is located on the front of device 200.

Device 200 also includes one or more accelerometers 268. FIG. 2A shows accelerometer 268 coupled to peripherals interface 218. Alternately, accelerometer 268 is coupled to an input controller 260 in I/O subsystem 206. Accelerometer 268 performs, for example, as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer,". In some embodiments, information is displayed on the touch screen display in a portrait view or a landscape view based on an analysis of data received from the one or more accelerometers. Device 200 optionally includes, in addition to accelerometer(s) 268, a magnetometer (not shown) and a GPS (or GLONASS or other global navigation system) receiver (not shown) for obtaining information concerning the location and orientation (e.g., portrait or landscape) of device 200.

In some embodiments, the software components stored in memory 202 include operating system 226, communication module (or set of instructions) 228, contact/motion module (or set of instructions) 230, graphics module (or set of instructions) 232, text input module (or set of instructions) 234, Global Positioning System (GPS) module (or set of instructions) 235, Digital Assistant Client Module 229, and applications (or sets of instructions) 236. Further, memory 202 stores data and models, such as user data and models 231. Furthermore, in some embodiments, memory 202 (FIG. 2A) or 470 (FIG. 4) stores device/global internal state 257, as shown in FIGS. 2A and 4. Device/global internal state 257 includes one or more of: active application state, indicating which applications, if any, are currently active; display state, indicating what applications, views or other information occupy various regions of touch screen display 212; sensor state, including information obtained from the device's various sensors and input control devices 216; and location information concerning the device's location and/or attitude.

Operating system 226 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 228 facilitates communication with other devices over one or more external ports 224 and also includes various software components for handling data received by RF circuitry 208 and/or external port 224. External port 224 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 230 optionally detects contact with touch screen 212 (in conjunction with display controller 256) and other touch-sensitive devices (e.g., a touchpad or physical click wheel). Contact/motion module 230 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 230 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 230 and display controller 256 detect contact on a touchpad.

In some embodiments, contact/motion module 230 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 200). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 230 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 232 includes various known software components for rendering and displaying graphics on touch screen 212 or other display, including components for changing the visual impact (e.g., brightness, transparency, saturation, contrast, or other visual property) of graphics that are displayed. As used herein, the term "graphics" includes any object that can be displayed to a user, including ,without limitation, text, web pages, icons (such as user-interface objects including soft keys), digital images, videos, animations, and the like.

In some embodiments, graphics module 232 stores data representing graphics to be used. Each graphic is, optionally, assigned a corresponding code. Graphics module 232 receives, from applications etc., one or more codes specifying graphics to be displayed along with, if necessary, coordinate data and other graphic property data, and then generates screen image data to output to display controller 256.

Haptic feedback module 233 includes various software components for generating instructions used by tactile output generator(s) 267 to produce tactile outputs at one or more locations on device 200 in response to user interactions with device 200.

Text input module 234, which is, in some examples, a component of graphics module 232, provides soft keyboards for entering text in various applications (e.g., contacts 237, email 240, IM 241, browser 247, and any other application that needs text input).

GPS module 235 determines the location of the device and provides this information for use in various applications (e.g., to telephone 238 for use in location-based dialing; to camera 243 as picture/video metadata; and to applications that provide location-based services such as weather widgets, local yellow page widgets, and map/navigation widgets).

Digital assistant client module 229 includes various client-side digital assistant instructions to provide the client-side functionalities of the digital assistant. For example, digital assistant client module 229 is capable of accepting voice input (e.g., speech input), text input, touch input, and/or gestural input through various user interfaces (e.g., microphone 213, accelerometer(s) 268, touch-sensitive display system 212, optical sensor(s) 229, other input control devices 216, etc.) of portable multifunction device 200. Digital assistant client module 229 is also capable of providing output in audio (e.g., speech output), visual, and/or tactile forms through various output interfaces (e.g., speaker 211, touch-sensitive display system 212, tactile output generator(s) 267, etc.) of portable multifunction device 200. For example, output is provided as voice, sound, alerts, text messages, menus, graphics, videos, animations, vibrations, and/or combinations of two or more of the above. During operation, digital assistant client module 229 communicates with DA server 106 using RF circuitry 208.

User data and models 231 include various data associated with the user (e.g., user-specific vocabulary data, user preference data, user-specified name pronunciations, data from the user's electronic address book, to-do lists, shopping lists, etc.) to provide the client-side functionalities of the digital assistant. Further, user data and models 231 include various models (e.g., speech recognition models, statistical language models, natural language processing models, ontology, task flow models, service models, etc.) for processing user input and determining user intent.

In some examples, digital assistant client module 229 utilizes the various sensors, subsystems, and peripheral devices of portable multifunction device 200 to gather additional information from the surrounding environment of the portable multifunction device 200 to establish a context associated with a user, the current user interaction, and/or the current user input. In some examples, digital assistant client module 229 provides the contextual information or a subset thereof with the user input to DA server 106 to help infer the user's intent. In some examples, the digital assistant also uses the contextual information to determine how to prepare and deliver outputs to the user. Contextual information is referred to as context data.

In some examples, the contextual information that accompanies the user input includes sensor information, e.g., lighting, ambient noise, ambient temperature, images or videos of the surrounding environment, etc. In some examples, the contextual information can also includes the physical state of the device, e.g., device orientation, device location, device temperature, power level, speed, acceleration, motion patterns, cellular signals strength, etc. In some examples, information related to the software state of DA server 106, e.g., running processes, installed programs, past and present network activities, background services, error logs, resources usage, etc., and of portable multifunction device 200 is provided to DA server 106 as contextual information associated with a user input.

In some examples, the digital assistant client module 229 selectively provides information (e.g., user data 231) stored on the portable multifunction device 200 in response to requests from DA server 106. In some examples, digital assistant client module 229 also elicits additional input from the user via a natural language dialogue or other user interfaces upon request by DA server 106. Digital assistant client module 229 passes the additional input to DA server 106 to help DA server 106 in intent deduction and/or fulfillment of the user's intent expressed in the user request.

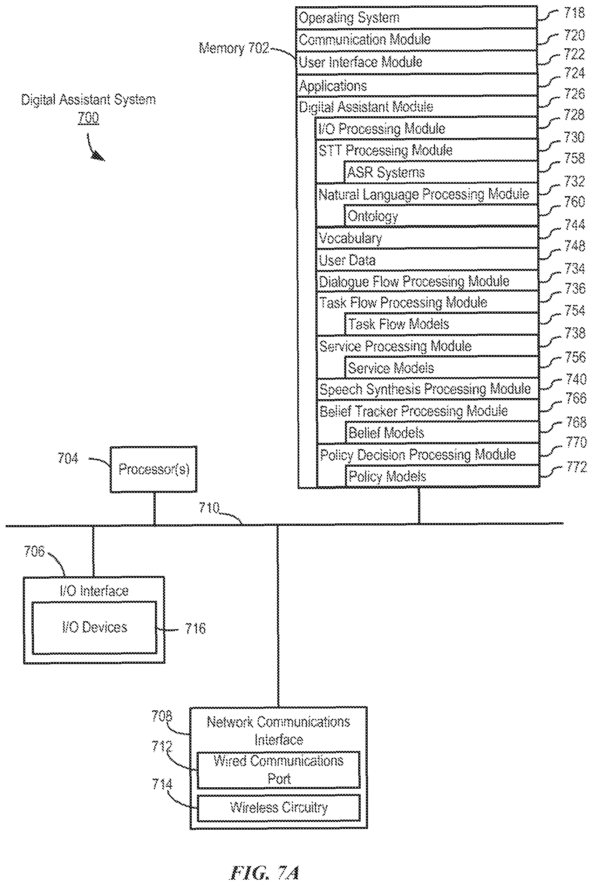

A more detailed description of a digital assistant is described below with reference to FIGS. 7A-7C. It should be recognized that digital assistant client module 229 can include any number of the sub-modules of digital assistant module 726 described below.

Applications 236 include the following modules (or sets of instructions), or a subset or superset thereof:
- Contacts module 237 (sometimes called an address book or contact list);
- Telephone module 238;
- Video conference module 239;
- E-mail client module 240;
- Instant messaging (IM) module 241;
- Workout support module 242;
- Camera module 243 for still and/or video images;
- Image management module 244;
- Video player module;
- Music player module;
- Browser module 247;
- Calendar module 248;
- Widget modules 249, which includes, in some examples, one or more of: weather widget 249-1, stocks widget 249-2, calculator widget 249-3, alarm clock widget 249-4, dictionary widget 249-5, and other widgets obtained by the user, as well as user-created widgets 249-6;
- Widget creator module 250 for making user-created widgets 249-6;
- Search module 251;
- Video and music player module 252, which merges video player module and music player module;
- Notes module 253;
- Map module 254; and/or
- Online video module 255.

Examples of other applications 236 that are stored in memory 202 include other word processing applications, other image editing applications, drawing applications, presentation applications, JAVA-enabled applications, encryption, digital rights management, voice recognition, and voice replication.

In conjunction with touch screen 212, display controller 256, contact/motion module 230, graphics module 232, and text input module 234, contacts module 237 are used to manage an address book or contact list (e.g., stored in application internal state 292 of contacts module 237 in memory 202 or memory 470), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 238, video conference module 239, e-mail 240, or IM 241; and so forth.

In conjunction with RF circuitry 208, audio circuitry 210, speaker 211, microphone 213, touch screen 212, display controller 256, contact/motion module 230, graphics module 232, and text input module 234, telephone module 238 are used to enter a sequence of characters corresponding to a telephone number, access one or more telephone numbers in contacts module 237, modify a telephone number that has been entered, dial a respective telephone number, conduct a conversation, and disconnect or hang up when the conversation is completed. As noted above, the wireless communication uses any of a plurality of communications standards, protocols, and technologies.

In conjunction with RF circuitry 208, audio circuitry 210, speaker 211, microphone 213, touch screen 212, display controller 256, optical sensor 264, optical sensor controller 258, contact/motion module 230, graphics module 232, text input module 234, contacts module 237, and telephone module 238, video conference module 239 includes executable instructions to initiate, conduct, and terminate a video conference between a user and one or more other participants in accordance with user instructions.

In conjunction with RF circuitry 208, touch screen 212, display controller 256, contact/motion module 230, graphics module 232, and text input module 234, e-mail client module 240 includes executable instructions to create, send, receive, and manage e-mail in response to user instructions. In conjunction with image management module 244, e-mail client module 240 makes it very easy to create and send e-mails with still or video images taken with camera module 243.

In conjunction with RF circuitry 208, touch screen 212, display controller 256, contact/motion module 230, graphics module 232, and text input module 234, the instant messaging module 241 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 208, touch screen 212, display controller 256, contact/motion module 230, graphics module 232, text input module 234, GPS module 235, map module 254, and music player module, workout support module 242 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 212, display controller 256, optical sensor(s) 264, optical sensor controller 258, contact/motion module 230, graphics module 232, and image management module 244, camera module 243 includes executable instructions to capture still images or video (including a video stream) and store them into memory 202, modify characteristics of a still image or video, or delete a still image or video from memory 202.

In conjunction with touch screen 212, display controller 256, contact/motion module 230, graphics module 232, text input module 234, and camera module 243, image management module 244 includes executable instructions to arrange, modify (e.g., edit), or otherwise manipulate, label, delete, present (e.g., in a digital slide show or album), and store still and/or video images.

In conjunction with RF circuitry 208, touch screen 212, display controller 256, contact/motion module 230, graphics module 232, and text input module 234, browser module 247 includes executable instructions to browse the Internet in accordance with user instructions, including searching, linking to, receiving, and displaying web pages or portions thereof, as well as attachments and other files linked to web pages.

In conjunction with RF circuitry 208, touch screen 212, display controller 256, contact/motion module 230, graphics module 232, text input module 234, e-mail client module 240, and browser module 247, calendar module 248 includes executable instructions to create, display, modify, and store calendars and data associated with calendars (e.g., calendar entries, to-do lists, etc.) in accordance with user instructions.

In conjunction with RF circuitry 208, touch screen 212, display controller 256, contact/motion module 230, graphics module 232, text input module 234, and browser module 247, widget modules 249 are mini-applications that can be downloaded and used by a user (e.g., weather widget 249-1, stocks widget 249-2, calculator widget 249-3, alarm clock widget 249-4, and dictionary widget 249-5) or created by the user (e.g., user-created widget 249-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 208, touch screen 212, display controller 256, contact/motion module 230, graphics module 232, text input module 234, and browser module 247, the widget creator module 250 are used by a user to create widgets (e.g., turning a user-specified portion of a web page into a widget).

In conjunction with touch screen 212, display controller 256, contact/motion module 230, graphics module 232, and text input module 234, search module 251 includes executable instructions to search for text, music, sound, image, video, and/or other files in memory 202 that match one or more search criteria (e.g., one or more user-specified search terms) in accordance with user instructions.

In conjunction with touch screen 212, display controller 256, contact/motion module 230, graphics module 232, audio circuitry 210, speaker 211, RF circuitry 208, and browser module 247, video and music player module 252 includes executable instructions that allow the user to download and play back recorded music and other sound files stored in one or more file formats, such as MP3 or AAC files, and executable instructions to display, present, or otherwise play back videos (e.g., on touch screen 212 or on an external, connected display via external port 224). In some embodiments, device 200 optionally includes the functionality of an MP3 player, such as an iPod (trademark of Apple Inc.).

In conjunction with touch screen 212, display controller 256, contact/motion module 230, graphics module 232, and text input module 234, notes module 253 includes executable instructions to create and manage notes, to-do lists, and the like in accordance with user instructions.

In conjunction with RF circuitry 208, touch screen 212, display controller 256, contact/motion module 230, graphics module 232, text input module 234, GPS module 235, and browser module 247, map module 254 are used to receive, display, modify, and store maps and data associated with maps (e.g., driving directions, data on stores and other points of interest at or near a particular location, and other location-based data) in accordance with user instructions.

In conjunction with touch screen 212, display controller 256, contact/motion module 230, graphics module 232, audio circuitry 210, speaker 211, RF circuitry 208, text input module 234, e-mail client module 240, and browser module 247, online video module 255 includes instructions that allow the user to access, browse, receive (e.g., by streaming and/or download), play back (e.g., on the touch screen or on an external, connected display via external port 224), send an e-mail with a link to a particular online video, and otherwise manage online videos in one or more file formats, such as H.264. In some embodiments, instant messaging module 241, rather than e-mail client module 240, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules can be combined or otherwise rearranged in various embodiments. For example, video player module can be combined with music player module into a single module (e.g., video and music player module 252, FIG. 2A). In some embodiments, memory 202 stores a subset of the modules and data structures identified above. Furthermore, memory 202 stores additional modules and data structures not described above.

In some embodiments, device 200 is a device where operation of a predefined set of functions on the device is performed exclusively through a touch screen and/or a touchpad. By using a touch screen and/or a touchpad as the primary input control device for operation of device 200, the number of physical input control devices (such as push buttons, dials, and the like) on device 200 is reduced.

The predefined set of functions that are performed exclusively through a touch screen and/or a touchpad optionally include navigation between user interfaces. In some embodiments, the touchpad, when touched by the user, navigates device 200 to a main, home, or root menu from any user interface that is displayed on device 200. In such embodiments, a "menu button" is implemented using a touchpad. In some other embodiments, the menu button is a physical push button or other physical input control device instead of a touchpad.

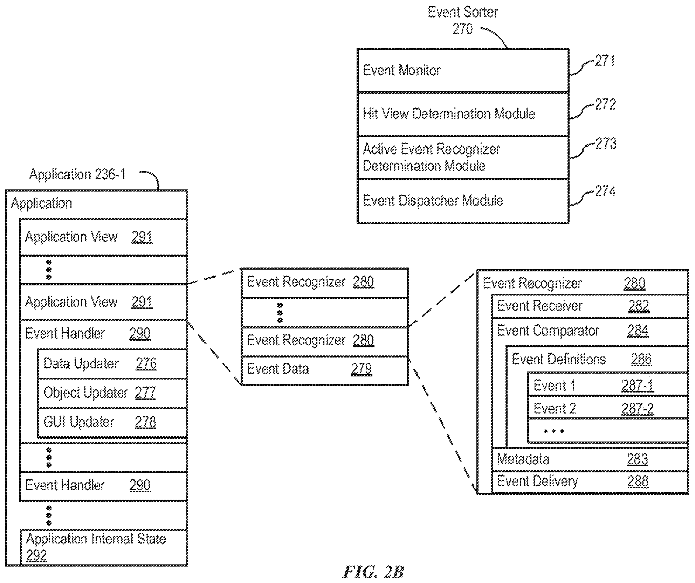

FIG. 2B is a block diagram illustrating exemplary components for event handling in accordance with some embodiments. In some embodiments, memory 202 (FIG. 2A) or . (FIG. 4) includes event sorter 270 (e.g., in operating system 226) and a respective application 236-1 (e.g., any of the aforementioned applications 237-251, 255, 480-490).

Event sorter 270 receives event information and determines the application 236-1 and application view 291 of application 236-1 to which to deliver the event information. Event sorter 270 includes event monitor 271 and event dispatcher module 274. In some embodiments, application 236-1 includes application internal state 292, which indicates the current application view(s) displayed on touch-sensitive display 212 when the application is active or executing. In some embodiments, device/global internal state 257 is used by event sorter 270 to determine which application(s) is (are) currently active, and application internal state 292 is used by event sorter 270 to determine application views 291 to which to deliver event information.

In some embodiments, application internal state 292 includes additional information, such as one or more of: resume information to be used when application 236-1 resumes execution, user interface state information that indicates information being displayed or that is ready for display by application 236-1, a state queue for enabling the user to go back to a prior state or view of application 236-1, and a redo/undo queue of previous actions taken by the user.

Event monitor 271 receives event information from peripherals interface 218. Event information includes information about a sub-event (e.g., a user touch on touch-sensitive display 212, as part of a multi-touch gesture). Peripherals interface 218 transmits information it receives from I/O subsystem 206 or a sensor, such as proximity sensor 266, accelerometer(s) 268, and/or microphone 213 (through audio circuitry 210). Information that peripherals interface 218 receives from I/O subsystem 206 includes information from touch-sensitive display 212 or a touch-sensitive surface.

In some embodiments, event monitor 271 sends requests to the peripherals interface 218 at predetermined intervals. In response, peripherals interface 218 transmits event information. In other embodiments, peripherals interface 218 transmits event information only when there is a significant event (e.g., receiving an input above a predetermined noise threshold and/or for more than a predetermined duration).

In some embodiments, event sorter 270 also includes a hit view determination module 272 and/or an active event recognizer determination module 273.

Hit view determination module 272 provides software procedures for determining where a sub-event has taken place within one or more views when touch-sensitive display 212 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected correspond to programmatic levels within a programmatic or view hierarchy of the application. For example, the lowest level view in which a touch is detected is called the hit view, and the set of events that are recognized as proper inputs is determined based, at least in part, on the hit view of the initial touch that begins a touch-based gesture.

Hit view determination module 272 receives information related to sub events of a touch-based gesture. When an application has multiple views organized in a hierarchy, hit view determination module 272 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 272, the hit view typically receives all sub-events related to the same touch or input source for which it was identified as the hit view.

Active event recognizer determination module 273 determines which view or views within a view hierarchy should receive a particular sequence of sub-events. In some embodiments, active event recognizer determination module 273 determines that only the hit view should receive a particular sequence of sub-events. In other embodiments, active event recognizer determination module 273 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 274 dispatches the event information to an event recognizer (e.g., event recognizer 280). In embodiments including active event recognizer determination module 273, event dispatcher module 274 delivers the event information to an event recognizer determined by active event recognizer determination module 273. In some embodiments, event dispatcher module 274 stores in an event queue the event information, which is retrieved by a respective event receiver 282.

In some embodiments, operating system 226 includes event sorter 270. Alternatively, application 236-1 includes event sorter 270. In yet other embodiments, event sorter 270 is a stand-alone module, or a part of another module stored in memory 202, such as contact/motion module 230.

In some embodiments, application 236-1 includes a plurality of event handlers 290 and one or more application views 291, each of which includes instructions for handling touch events that occur within a respective view of the application's user interface. Each application view 291 of the application 236-1 includes one or more event recognizers 280. Typically, a respective application view 291 includes a plurality of event recognizers 280. In other embodiments, one or more of event recognizers 280 are part of a separate module, such as a user interface kit (not shown) or a higher level object from which application 236-1 inherits methods and other properties. In some embodiments, a respective event handler 290 includes one or more of: data updater 276, object updater 277, GUI updater 278, and/or event data 279 received from event sorter 270. Event handler 290 utilizes or calls data updater 276, object updater 277, or GUI updater 278 to update the application internal state 292. Alternatively, one or more of the application views 291 include one or more respective event handlers 290. Also, in some embodiments, one or more of data updater 276, object updater 277, and GUI updater 278 are included in a respective application view 291.

A respective event recognizer 280 receives event information (e.g., event data 279) from event sorter 270 and identifies an event from the event information. Event recognizer 280 includes event receiver 282 and event comparator 284. In some embodiments, event recognizer 280 also includes at least a subset of: metadata 283, and event delivery instructions 288 (which include sub-event delivery instructions).

Event receiver 282 receives event information from event sorter 270. The event information includes information about a sub-event, for example, a touch or a touch movement. Depending on the sub-event, the event information also includes additional information, such as location of the sub-event. When the sub-event concerns motion of a touch, the event information also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 284 compares the event information to predefined event or sub-event definitions and, based on the comparison, determines an event or sub event, or determines or updates the state of an event or sub-event. In some embodiments, event comparator 284 includes event definitions 286. Event definitions 286 contain definitions of events (e.g., predefined sequences of sub-events), for example, event 1 (287-1), event 2 (287-2), and others. In some embodiments, sub-events in an event (287) include, for example, touch begin, touch end, touch movement, touch cancellation, and multiple touching. In one example, the definition for event 1 (287-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (287-2) is a dragging on a displayed object. The dragging, for example, comprises a touch (or contact) on the displayed object for a predetermined phase, a movement of the touch across touch-sensitive display 212, and liftoff of the touch (touch end). In some embodiments, the event also includes information for one or more associated event handlers 290.

In some embodiments, event definition 287 includes a definition of an event for a respective user-interface object. In some embodiments, event comparator 284 performs a hit test to determine which user-interface object is associated with a sub-event. For example, in an application view in which three user-interface objects are displayed on touch-sensitive display 212, when a touch is detected on touch-sensitive display 212, event comparator 284 performs a hit test to determine which of the three user-interface objects is associated with the touch (sub-event). If each displayed object is associated with a respective event handler 290, the event comparator uses the result of the hit test to determine which event handler 290 should be activated. For example, event comparator 284 selects an event handler associated with the sub-event and the object triggering the hit test.

In some embodiments, the definition for a respective event (287) also includes delayed actions that delay delivery of the event information until after it has been determined whether the sequence of sub-events does or does not correspond to the event recognizer's event type.

When a respective event recognizer 280 determines that the series of sub-events do not match any of the events in event definitions 286, the respective event recognizer 280 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 280 includes metadata 283 with configurable properties, flags, and/or lists that indicate how the event delivery system should perform sub-event delivery to actively involved event recognizers. In some embodiments, metadata 283 includes configurable properties, flags, and/or lists that indicate how event recognizers interact, or are enabled to interact, with one another. In some embodiments, metadata 283 includes configurable properties, flags, and/or lists that indicate whether sub-events are delivered to varying levels in the view or programmatic hierarchy.

In some embodiments, a respective event recognizer 280 activates event handler 290 associated with an event when one or more particular sub-events of an event are recognized. In some embodiments, a respective event recognizer 280 delivers event information associated with the event to event handler 290. Activating an event handler 290 is distinct from sending (and deferred sending) sub-events to a respective hit view. In some embodiments, event recognizer 280 throws a flag associated with the recognized event, and event handler 290 associated with the flag catches the flag and performs a predefined process.

In some embodiments, event delivery instructions 288 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 276 creates and updates data used in application 236-1. For example, data updater 276 updates the telephone number used in contacts module 237, or stores a video file used in video player module. In some embodiments, object updater 277 creates and updates objects used in application 236-1. For example, object updater 277 creates a new user-interface object or updates the position of a user-interface object. GUI updater 278 updates the GUI. For example, GUI updater 278 prepares display information and sends it to graphics module 232 for display on a touch-sensitive display.

In some embodiments, event handler(s) 290 includes or has access to data updater 276, object updater 277, and GUI updater 278. In some embodiments, data updater 276, object updater 277, and GUI updater 278 are included in a single module of a respective application 236-1 or application view 291. In other embodiments, they are included in two or more software modules.

It shall be understood that the foregoing discussion regarding event handling of user touches on touch-sensitive displays also applies to other forms of user inputs to operate multifunction devices 200 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 3 illustrates a portable multifunction device 200 having a touch screen 212 in accordance with some embodiments. The touch screen optionally displays one or more graphics within user interface (UI) 300. In this embodiment, as well as others described below, a user is enabled to select one or more of the graphics by making a gesture on the graphics, for example, with one or more fingers 302 (not drawn to scale in the figure) or one or more styluses 303 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 200. In some implementations or circumstances, inadvertent contact with a graphic does not select the graphic. For example, a swipe gesture that sweeps over an application icon optionally does not select the corresponding application when the gesture corresponding to selection is a tap.

Device 200 also includes one or more physical buttons, such as "home" or menu button 304. As described previously, menu button 304 is used to navigate to any application 236 in a set of applications that is executed on device 200. Alternatively, in some embodiments, the menu button is implemented as a soft key in a GUI displayed on touch screen 212.

In one embodiment, device 200 includes touch screen 212, menu button 304, push button 306 for powering the device on/off and locking the device, volume adjustment button(s) 308, subscriber identity module (SIM) card slot 310, headset jack 312, and docking/charging external port 224. Push button 306 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 200 also accepts verbal input for activation or deactivation of some functions through microphone 213. Device 200 also, optionally, includes one or more contact intensity sensors 265 for detecting intensity of contacts on touch screen 212 and/or one or more tactile output generators 267 for generating tactile outputs for a user of device 200.

FIG. 4 is a block diagram of an exemplary multifunction device with a display and a touch-sensitive surface in accordance with some embodiments. Device 400 need not be portable. In some embodiments, device 400 is a laptop computer, a desktop computer, a tablet computer, a multimedia player device, a navigation device, an educational device (such as a child's learning toy), a gaming system, or a control device (e.g., a home or industrial controller). Device 400 typically includes one or more processing units (CPUs) 410, one or more network or other communications interfaces 460, memory 470, and one or more communication buses 420 for interconnecting these components. Communication buses 420 optionally include circuitry (sometimes called a chipset) that interconnects and controls communications between system components. Device 400 includes input/output (I/O) interface 430 comprising display 440, which is typically a touch screen display. I/O interface 430 also optionally includes a keyboard and/or mouse (or other pointing device) 450 and touchpad 455, tactile output generator 457 for generating tactile outputs on device 400 (e.g., similar to tactile output generator(s) 267 described above with reference to FIG. 2A), sensors 459 (e.g., optical, acceleration, proximity, touch-sensitive, and/or contact intensity sensors similar to contact intensity sensor(s) 265 described above with reference to FIG. 2A). Memory 470 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 470 optionally includes one or more storage devices remotely located from CPU(s) 410. In some embodiments, memory 470 stores programs, modules, and data structures analogous to the programs, modules, and data structures stored in memory 202 of portable multifunction device 200 (FIG. 2A), or a subset thereof. Furthermore, memory 470 optionally stores additional programs, modules, and data structures not present in memory 202 of portable multifunction device 200. For example, memory 470 of device 400 optionally stores drawing module 480, presentation module 482, word processing module 484, website creation module 486, disk authoring module 488, and/or spreadsheet module 490, while memory 202 of portable multifunction device 200 (FIG. 2A) optionally does not store these modules.

Each of the above-identified elements in FIG. 4 is, in some examples, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are combined or otherwise rearranged in various embodiments. In some embodiments, memory 470 stores a subset of the modules and data structures identified above. Furthermore, memory 470 stores additional modules and data structures not described above.

Attention is now directed towards embodiments of user interfaces that can be implemented on, for example, portable multifunction device 200.

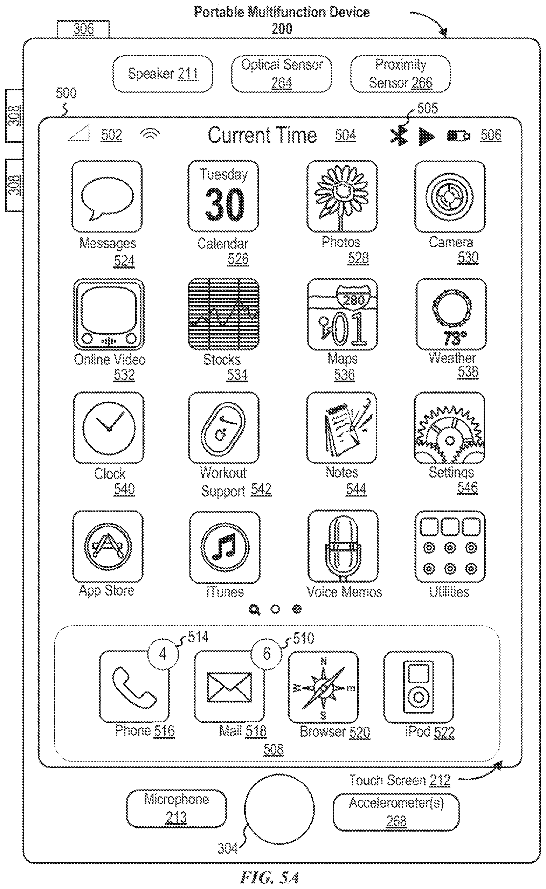

FIG. 5A illustrates an exemplary user interface for a menu of applications on portable multifunction device 200 in accordance with some embodiments. Similar user interfaces are implemented on device 400. In some embodiments, user interface 500 includes the following elements, or a subset or superset thereof:

Signal strength indicator(s) 502 for wireless communication(s), such as cellular and Wi-Fi signals;
- Time 504;
- Bluetooth indicator 505;
- Battery status indicator 506;
- Tray 508 with icons for frequently used applications, such as:
   ∘ Icon 516 for telephone module 238, labeled "Phone," which optionally includes an indicator 514 of the number of missed calls or voicemail messages;
   ∘ Icon 518 for e-mail client module 240, labeled "Mail," which optionally includes an indicator 510 of the number of unread e-mails;
   ∘ Icon 520 for browser module 247, labeled "Browser;" and
   ∘ Icon 522 for video and music player module 252, also referred to as iPod (trademark of Apple Inc.) module 252, labeled "iPod;" and
- Icons for other applications, such as:
   ∘ Icon 524 for IM module 241, labeled "Messages;"
   ∘ Icon 526 for calendar module 248, labeled "Calendar;"
   ∘ Icon 528 for image management module 244, labeled "Photos;"
   ∘ Icon 530 for camera module 243, labeled "Camera;"
   ∘ Icon 532 for online video module 255, labeled "Online Video;"
   ∘ Icon 534 for stocks widget 249-2, labeled "Stocks;"
   ∘ Icon 536 for map module 254, labeled "Maps;"
   ∘ Icon 538 for weather widget 249-1, labeled "Weather;"
   ∘ Icon 540 for alarm clock widget 249-4, labeled "Clock;"
   ∘ Icon 542 for workout support module 242, labeled "Workout Support;"
   ∘ Icon 544 for notes module 253, labeled "Notes;" and
   ∘ Icon 546 for a settings application or module, labeled "Settings," which provides access to settings for device 200 and its various applications 236.

It should be noted that the icon labels illustrated in FIG. 5A are merely exemplary. For example, icon 522 for video and music player module 252 is optionally labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

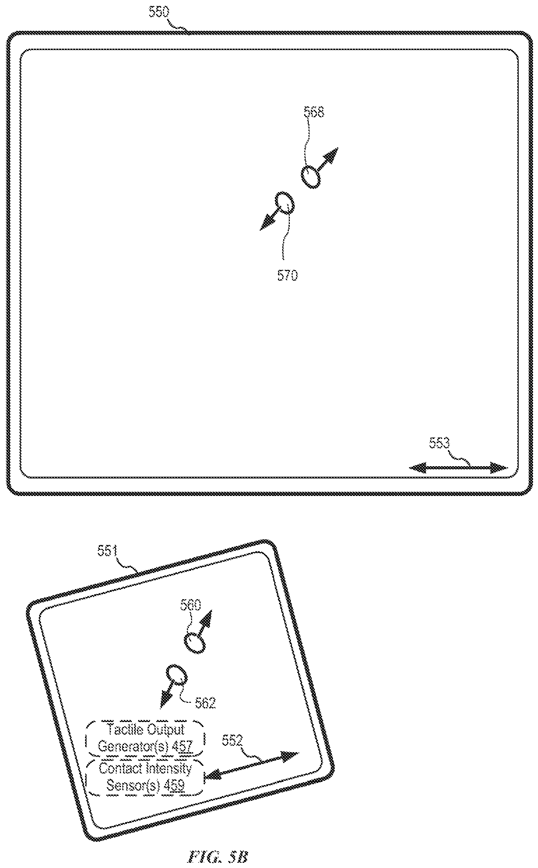

FIG. 5B illustrates an exemplary user interface on a device (e.g., device 400, FIG. 4) with a touch-sensitive surface 551 (e.g., a tablet or touchpad 455, FIG. 4) that is separate from the display 550 (e.g., touch screen display 212). Device 400 also, optionally, includes one or more contact intensity sensors (e.g., one or more of sensors 457) for detecting intensity of contacts on touch-sensitive surface 551 and/or one or more tactile output generators 459 for generating tactile outputs for a user of device 400.

Although some of the examples which follow will be given with reference to inputs on touch screen display 212 (where the touch-sensitive surface and the display are combined), in some embodiments, the device detects inputs on a touch-sensitive surface that is separate from the display, as shown in FIG. 5B. In some embodiments, the touch-sensitive surface (e.g., 551 in FIG. 5B) has a primary axis (e.g., 552 in FIG. 5B) that corresponds to a primary axis (e.g., 553 in FIG. 5B) on the display (e.g., 550). In accordance with these embodiments, the device detects contacts (e.g., 560 and 562 in FIG. 5B) with the touch-sensitive surface 551 at locations that correspond to respective locations on the display (e.g., in FIG. 5B, 560 corresponds to 568 and 562 corresponds to 570). In this way, user inputs (e.g., contacts 560 and 562, and movements thereof) detected by the device on the touch-sensitive surface (e.g., 551 in FIG. 5B) are used by the device to manipulate the user interface on the display (e.g., 550 in FIG. 5B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

FIG. 6A illustrates exemplary personal electronic device 600. Device 600 includes body 602. In some embodiments, device 600 includes some or all of the features described with respect to devices 200 and 400 (e.g., FIGS. 2A-4). In some embodiments, device 600 has touch-sensitive display screen 604, hereafter touch screen 604. Alternatively, or in addition to touch screen 604, device 600 has a display and a touch-sensitive surface. As with devices 200 and 400, in some embodiments, touch screen 604 (or the touch-sensitive surface) has one or more intensity sensors for detecting intensity of contacts (e.g., touches) being applied. The one or more intensity sensors of touch screen 604 (or the touch-sensitive surface) provide output data that represents the intensity of touches. The user interface of device 600 responds to touches based on their intensity, meaning that touches of different intensities can invoke different user interface operations on device 600.

Techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, and International Patent Application Serial No. PCT/US2013/069483, titled "Device, Method, and Graphical User Interface for Transitioning Between Touch Input to Display Output Relationships," filed November 11, 2013.

In some embodiments, device 600 has one or more input mechanisms 606 and 608. Input mechanisms 606 and 608, if included, are physical. Examples of physical input mechanisms include push buttons and rotatable mechanisms. In some embodiments, device 600 has one or more attachment mechanisms. Such attachment mechanisms, if included, can permit attachment of device 600 with, for example, hats, eyewear, earrings, necklaces, shirts, jackets, bracelets, watch straps, chains, trousers, belts, shoes, purses, backpacks, and so forth. These attachment mechanisms permit device 600 to be worn by a user.

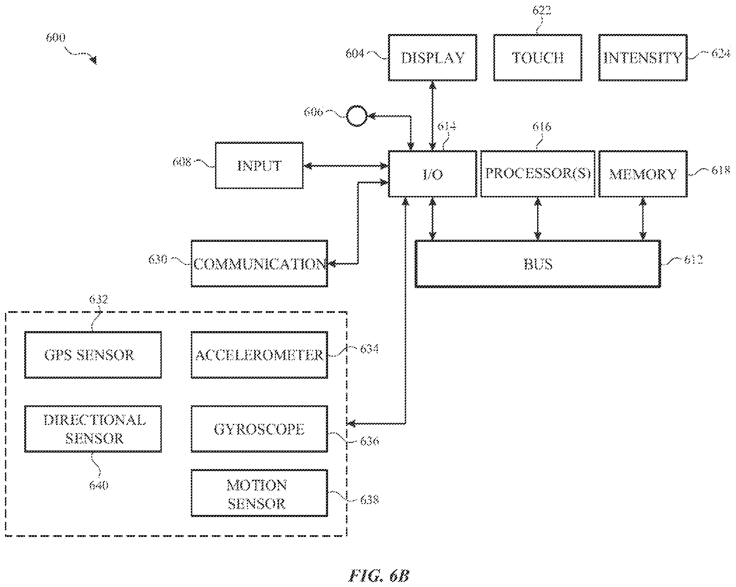

FIG. 6B depicts exemplary personal electronic device 600. In some embodiments, device 600 includes some or all of the components described with respect to FIGS. 2A, 2B, and 4. Device 600 has bus 612 that operatively couples I/O section 614 with one or more computer processors 616 and memory 618. I/O section 614 is connected to display 604, which can have touch-sensitive component 622 and, optionally, touch-intensity sensitive component 624. In addition, I/O section 614 is connected with communication unit 630 for receiving application and operating system data, using Wi-Fi, Bluetooth, near field communication (NFC), cellular, and/or other wireless communication techniques. Device 600 includes input mechanisms 606 and/or 608. Input mechanism 606 is a rotatable input device or a depressible and rotatable input device, for example. Input mechanism 608 is a button, in some examples.

Input mechanism 608 is a microphone, in some examples. Personal electronic device 600 includes, for example, various sensors, such as GPS sensor 632, accelerometer 634, directional sensor 640 (e.g., compass), gyroscope 636, motion sensor 638, and/or a combination thereof, all of which are operatively connected to I/O section 614.

Memory 618 of personal electronic device 600 is a non-transitory computer-readable storage medium, for storing computer-executable instructions, which, when executed by one or more computer processors 616, for example, cause the computer processors to perform the techniques and processes described below. The computer-executable instructions, for example, are also stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. Personal electronic device 600 is not limited to the components and configuration of FIG. 6B, but can include other or additional components in multiple configurations.

As used here, the term "affordance" refers to a user-interactive graphical user interface object that is, for example, displayed on the display screen of devices 200, 400, and/or 600 (FIGS. 2, 4, and 6). For example, an image (e.g., icon), a button, and text (e.g., hyperlink) each constitutes an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 455 in FIG. 4 or touch-sensitive surface 551 in FIG. 5B) while the cursor is over a particular user interface element (e.g., a button, window, slider or other user interface element), the particular user interface element is adjusted in accordance with the detected input. In some implementations that include a touch screen display (e.g., touch-sensitive display system 212 in FIG. 2A or touch screen 212 in FIG. 5A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation) rather than being used to determine whether to perform a first operation or a second operation.

In some embodiments, a portion of a gesture is identified for purposes of determining a characteristic intensity. For example, a touch-sensitive surface receives a continuous swipe contact transitioning from a start location and reaching an end location, at which point the intensity of the contact increases. In this example, the characteristic intensity of the contact at the end location is based on only a portion of the continuous swipe contact, and not the entire swipe contact (e.g., only the portion of the swipe contact at the end location). In some embodiments, a smoothing algorithm is applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

### 3. Digital Assistant System

FIG. 7A illustrates a block diagram of digital assistant system 700 in accordance with various examples. In some examples, digital assistant system 700 is implemented on a standalone computer system. In some examples, digital assistant system 700 is distributed across multiple computers. In some examples, some of the modules and functions of the digital assistant are divided into a server portion and a client portion, where the client portion resides on one or more user devices (e.g., devices 104, 122, 200, 400, or 600) and communicates with the server portion (e.g., server system 108) through one or more networks, e.g., as shown in FIG. 1. In some examples, digital assistant system 700 is an implementation of server system 108 (and/or DA server 106) shown in FIG. 1. It should be noted that digital assistant system 700 is only one example of a digital assistant system, and that digital assistant system 700 can have more or fewer components than shown, can combine two or more components, or can have a different configuration or arrangement of the components. The various components shown in FIG. 7A are implemented in hardware, software instructions for execution by one or more processors, firmware, including one or more signal processing and/or application specific integrated circuits, or a combination thereof.

Digital assistant system 700 includes memory 702, one or more processors 704, input/output (I/O) interface 706, and network communications interface 708. These components can communicate with one another over one or more communication buses or signal lines 710.

In some examples, memory 702 includes a non-transitory computer-readable medium, such as high-speed random access memory and/or a non-volatile computer-readable storage medium (e.g., one or more magnetic disk storage devices, flash memory devices, or other non-volatile solid-state memory devices).

In some examples, I/O interface 706 couples input/output devices 716 of digital assistant system 700, such as displays, keyboards, touch screens, and microphones, to user interface module 722. I/O interface 706, in conjunction with user interface module 722, receives user inputs (e.g., voice input, keyboard inputs, touch inputs, etc.) and processes them accordingly. In some examples, e.g., when the digital assistant is implemented on a standalone user device, digital assistant system 700 includes any of the components and I/O communication interfaces described with respect to devices 200, 400, or 600 in FIGS. 2A, 4, 6A-B, respectively. In some examples, digital assistant system 700 represents the server portion of a digital assistant implementation, and can interact with the user through a client-side portion residing on a user device (e.g., devices 104, 200, 400, or 600).

In some examples, the network communications interface 708 includes wired communication port(s) 712 and/or wireless transmission and reception circuitry 714. The wired communication port(s) receives and send communication signals via one or more wired interfaces, e.g., Ethernet, Universal Serial Bus (USB), FIREWIRE, etc. The wireless circuitry 714 receives and sends RF signals and/or optical signals from/to communications networks and other communications devices. The wireless communications use any of a plurality of communications standards, protocols, and technologies, such as GSM, EDGE, CDMA, TDMA, Bluetooth, Wi-Fi, VoIP, Wi-MAX, or any other suitable communication protocol. Network communications interface 708 enables communication between digital assistant system 700 with networks, such as the Internet, an intranet, and/or a wireless network, such as a cellular telephone network, a wireless local area network (LAN), and/or a metropolitan area network (MAN), and other devices.

In some examples, memory 702, or the computer-readable storage media of memory 702, stores programs, modules, instructions, and data structures including all or a subset of: operating system 718, communications module 720, user interface module 722, one or more applications 724, and digital assistant module 726. In particular, memory 702, or the computer-readable storage media of memory 702, stores instructions for performing the processes described below. One or more processors 704 execute these programs, modules, and instructions, and reads/writes from/to the data structures.

Operating system 718 (e.g., Darwin, RTXC, LINUX, UNIX, iOS, OS X, WINDOWS, or an embedded operating system such as VxWorks) includes various software components and/or drivers for controlling and managing general system tasks (e.g., memory management, storage device control, power management, etc.) and facilitates communications between various hardware, firmware, and software components.

Communications module 720 facilitates communications between digital assistant system 700 with other devices over network communications interface 708. For example, communications module 720 communicates with RF circuitry 208 of electronic devices such as devices 200, 400, and 600 shown in FIG. 2A, 4, 6A-B, respectively. Communications module 720 also includes various components for handling data received by wireless circuitry 714 and/or wired communications port 712.

User interface module 722 receives commands and/or inputs from a user via I/O interface 706 (e.g., from a keyboard, touch screen, pointing device, controller, and/or microphone), and generate user interface objects on a display. User interface module 722 also prepares and delivers outputs (e.g., speech, sound, animation, text, icons, vibrations, haptic feedback, light, etc.) to the user via the I/O interface 706 (e.g., through displays, audio channels, speakers, touch-pads, etc.).

Applications 724 include programs and/or modules that are configured to be executed by one or more processors 704. For example, if the digital assistant system is implemented on a standalone user device, applications 724 include user applications, such as games, a calendar application, a navigation application, or an email application. If digital assistant system 700 is implemented on a server, applications 724 include resource management applications, diagnostic applications, or scheduling applications, for example.

Memory 702 also stores digital assistant module 726 (or the server portion of a digital assistant). In some examples, digital assistant module 726 includes the following sub-modules, or a subset or superset thereof: input/output processing module 728, speech-to-text (STT) processing module 730, natural language processing module 732, dialogue flow processing module 734, task flow processing module 736, service processing module 738, speech synthesis processing module 740, belief tracker processing module 766, and policy decision processing module 770. Each of these modules has access to one or more of the following systems or data and models of the digital assistant module 726, or a subset or superset thereof: ontology 760, vocabulary index 744, user data 748, task flow models 754, service models 756, ASR systems 758, belief models 768, and policy models 772.

In some examples, using the processing modules, data, system, and models implemented in digital assistant module 726, the digital assistant can perform at least some of the following: converting speech input into text; identifying a user's intent expressed in a natural language input received from the user; actively eliciting and obtaining information needed to fully infer the user's intent (e.g., by disambiguating words, games, intentions, etc.); determining the task flow for fulfilling the inferred intent; and executing the task flow to fulfill the inferred intent.

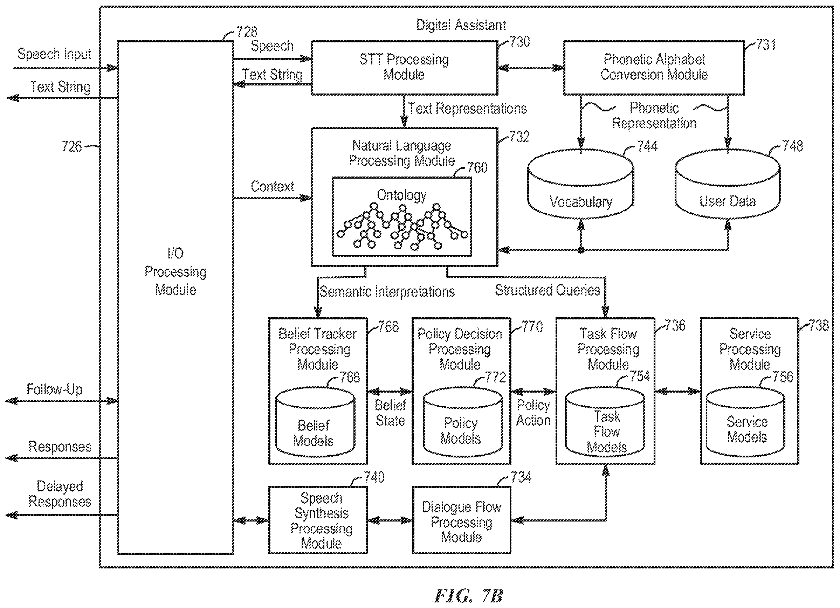

In some examples, as shown in FIG. 7B, I/O processing module 728 interacts with the user through I/O devices 716 in FIG. 7A or with a user device (e.g., devices 104, 200, 400, or 600) through network communications interface 708 in FIG. 7A to obtain user input (e.g., a speech input) and to provide responses (e.g., as speech outputs) to the user input. I/O processing module 728 optionally obtains contextual information associated with the user input from the user device, along with or shortly after the receipt of the user input. The contextual information includes user-specific data, vocabulary, and/or preferences relevant to the user input. In some examples, the contextual information also includes software and hardware states of the user device at the time the user request is received, and/or information related to the surrounding environment of the user at the time that the user request was received. In some examples, I/O processing module 728 also sends follow-up questions to, and receive answers from, the user regarding the user request. When a user request is received by I/O processing module 728 and the user request includes speech input, I/O processing module 728 forwards the speech input to STT processing module 730 (or speech recognizer) for speech-to-text conversions.

STT processing module 730 includes one or more ASR systems 758. The one or more ASR systems can process the speech input (e.g., user utterance) that is received through I/O processing module 728 to produce a recognition result. Each ASR system includes a front-end speech pre-processor. The front-end speech pre-processor extracts representative features from the speech input. For example, the front-end speech pre-processor performs a Fourier transform on the speech input to extract spectral features that characterize the speech input as a sequence of representative multi-dimensional vectors. Further, each ASR system includes one or more speech recognition models (e.g., acoustic models and/or language models) and implements one or more speech recognition engines. Examples of speech recognition models include Hidden Markov Models, Gaussian-Mixture Models, Deep Neural Network Models, n-gram language models, and other statistical models. Examples of speech recognition engines include the dynamic time warping based engines and weighted finite-state transducers (WFST) based engines. The one or more speech recognition models and the one or more speech recognition engines are used to process the extracted representative features of the front-end speech pre-processor to produce intermediate recognitions results (e.g., phonemes, phonemic strings, and sub-words), and ultimately, text recognition results (e.g., words, word strings, or sequence of tokens). In some examples, the speech input is processed at least partially by a third-party service or on the user's device (e.g., device 104, 200, 400, or 600) to produce the recognition result. Once STT processing module 730 produces recognition results containing a text string (e.g., words, or sequence of words, or sequence of tokens), the recognition result is passed to natural language processing module 732 for intent deduction. In some examples, STT processing module 730 produces multiple candidate text representations of the speech input. Each candidate text representation is a sequence of words or tokens corresponding to the speech input. In some examples, each candidate text representation is associated with a speech recognition confidence score. Based on the speech recognition confidence scores, STT processing module 730 ranks the candidate text representations and provides the n-best (e.g., n highest ranked) candidate text representation(s) to natural language processing module 732 for intent deduction, where n is a predetermined integer greater than zero. For example, in one example, only the highest ranked (n=1) candidate text representation is passed to natural language processing module 732 for intent deduction. In another example, the five highest ranked (n=5) candidate text representations are passed to natural language processing module 732 for intent deduction.

More details on the speech-to-text processing are described in U.S. Utility Application Serial No. 13/236,942 for "Consolidating Speech Recognition Results," filed on September 20, 2011.

In some examples, STT processing module 730 includes and/or accesses a vocabulary of recognizable words via phonetic alphabet conversion module 731. Each vocabulary word is associated with one or more candidate pronunciations of the word represented in a speech recognition phonetic alphabet. In particular, the vocabulary of recognizable words includes a word that is associated with a plurality of candidate pronunciations. For example, the vocabulary includes the word "tomato" that is associated with the candidate pronunciations of 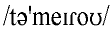 and /ta'matou/. Further, vocabulary words are associated with custom candidate pronunciations that are based on previous speech inputs from the user. Such custom candidate pronunciations are stored in STT processing module 730 and are associated with a particular user via the user's profile on the device. In some examples, the candidate pronunciations for words are determined based on the spelling of the word and one or more linguistic and/or phonetic rules. In some examples, the candidate pronunciations are manually generated, e.g., based on known canonical pronunciations.

In some examples, the candidate pronunciations are ranked based on the commonness of the candidate pronunciation. For example, the candidate pronunciation 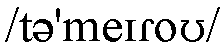 is ranked higher than /ta'matou/, because the former is a more commonly used pronunciation (e.g., among all users, for users in a particular geographical region, or for any other appropriate subset of users). In some examples, candidate pronunciations are ranked based on whether the candidate pronunciation is a custom candidate pronunciation associated with the user. For example, custom candidate pronunciations are ranked higher than canonical candidate pronunciations. This can be useful for recognizing proper nouns having a unique pronunciation that deviates from canonical pronunciation. In some examples, candidate pronunciations are associated with one or more speech characteristics, such as geographic origin, nationality, or ethnicity. For example, the candidate pronunciation 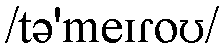 is associated with the United States, whereas the candidate pronunciation /ta'matou/ is associated with Great Britain. Further, the rank of the candidate pronunciation is based on one or more characteristics (e.g., geographic origin, nationality, ethnicity, etc.) of the user stored in the user's profile on the device. For example, it can be determined from the user's profile that the user is associated with the United States. Based on the user being associated with the United States, the candidate pronunciation 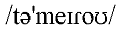 (associated with the United States) is ranked higher than the candidate pronunciation 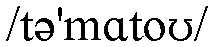 (associated with Great Britain). In some examples, one of the ranked candidate pronunciations is selected as a predicted pronunciation (e.g., the most likely pronunciation).

When a speech input is received, STT processing module 730 is used to determine the phonemes corresponding to the speech input (e.g., using an acoustic model), and then attempt to determine words that match the phonemes (e.g., using a language model). For example, if STT processing module 730 first identifies the sequence of phonemes 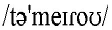 corresponding to a portion of the speech input, it can then determine, based on vocabulary index 744, that this sequence corresponds to the word "tomato."

In some examples, STT processing module 730 uses approximate matching techniques to determine words in an utterance. Thus, for example, the STT processing module 730 determines that the sequence of phonemes 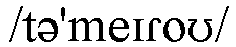 corresponds to the word "tomato," even if that particular sequence of phonemes is not one of the candidate sequence of phonemes for that word.

Natural language processing module 732 ("natural language processor") of the digital assistant takes the n-best candidate text representation(s) ("word sequence(s)" or "token sequence(s)") generated by STT processing module 730, and attempts to associate each of the candidate text representations with one or more "actionable intents" recognized by the digital assistant. In some examples, an "actionable intent" (or "user intent") represents a task that can be performed by the digital assistant, and can have an associated task flow implemented in task flow models 754. The associated task flow is a series of programmed actions and steps that the digital assistant takes in order to perform the task. The scope of a digital assistant's capabilities is dependent on the number and variety of task flows that have been implemented and stored in task flow models 754, or in other words, on the number and variety of "actionable intents" that the digital assistant recognizes. The effectiveness of the digital assistant, however, also dependents on the assistant's ability to infer the correct "actionable intent(s)" from the user request expressed in natural language.

In some examples, in addition to the sequence of words or tokens obtained from STT processing module 730, natural language processing module 732 also receives contextual information associated with the user request, e.g., from I/O processing module 728. The natural language processing module 732 optionally uses the contextual information to clarify, supplement, and/or further define the information contained in the candidate text representations received from STT processing module 730. The contextual information includes, for example, user preferences, hardware, and/or software states of the user device, sensor information collected before, during, or shortly after the user request, prior interactions (e.g., dialogue) between the digital assistant and the user, and the like. As described herein, contextual information is, in some examples, dynamic, and changes with time, location, content of the dialogue, and other factors.

In some examples, the natural language processing is based on, e.g., ontology 760. Ontology 760 is a hierarchical structure containing many nodes, each node representing either an "actionable intent" or a "property" relevant to one or more of the "actionable intents" or other "properties." As noted above, an "actionable intent" represents a task that the digital assistant is capable of performing, i.e., it is "actionable" or can be acted on. A "property" represents a parameter associated with an actionable intent or a sub-aspect of another property. A linkage between an actionable intent node and a property node in ontology 760 defines how a parameter represented by the property node pertains to the task represented by the actionable intent node.

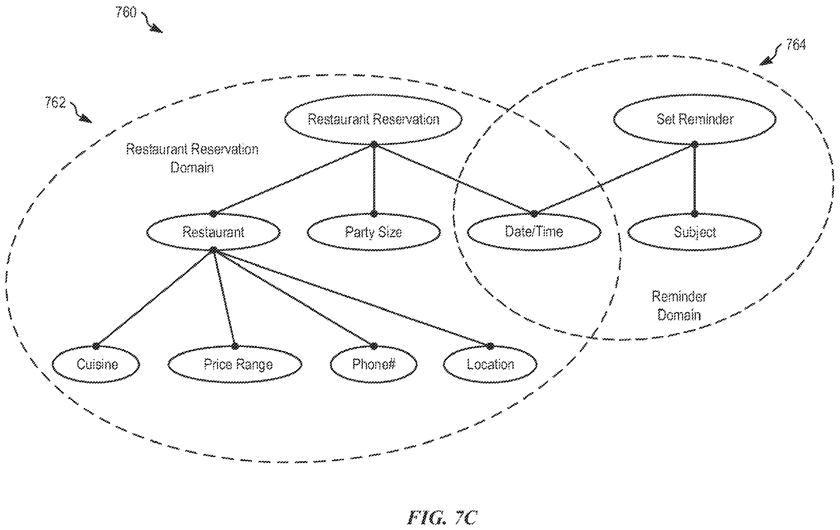

In some examples, ontology 760 is made up of actionable intent nodes and property nodes. Within ontology 760, each actionable intent node is linked to one or more property nodes either directly or through one or more intermediate property nodes. Similarly, each property node is linked to one or more actionable intent nodes either directly or through one or more intermediate property nodes. For example, as shown in FIG. 7C, ontology 760 includes a "restaurant reservation" node (i.e., an actionable intent node). Property nodes "restaurant," "date/time" (for the reservation), and "party size" are each directly linked to the actionable intent node (i.e., the "restaurant reservation" node).

In addition, property nodes "cuisine," "price range," "phone number," and "location" are sub-nodes of the property node "restaurant," and are each linked to the "restaurant reservation" node (i.e., the actionable intent node) through the intermediate property node "restaurant." For another example, as shown in FIG. 7C, ontology 760 also includes a "set reminder" node (i.e., another actionable intent node). Property nodes "date/time" (for setting the reminder) and "subject" (for the reminder) are each linked to the "set reminder" node. Since the property "date/time" is relevant to both the task of making a restaurant reservation and the task of setting a reminder, the property node "date/time" is linked to both the "restaurant reservation" node and the "set reminder" node in ontology 760.

An actionable intent node, along with its linked concept nodes, is described as a "domain." In the present discussion, each domain is associated with a respective actionable intent, and refers to the group of nodes (and the relationships there between) associated with the particular actionable intent. For example, ontology 760 shown in FIG. 7C includes an example of restaurant reservation domain 762 and an example of reminder domain 764 within ontology 760. The restaurant reservation domain includes the actionable intent node "restaurant reservation," property nodes "restaurant," "date/time," and "party size," and sub-property nodes "cuisine," "price range," "phone number," and "location." Reminder domain 764 includes the actionable intent node "set reminder," and property nodes "subject" and "date/time." In some examples, ontology 760 is made up of many domains. Each domain shares one or more property nodes with one or more other domains. For example, the "date/time" property node is associated with many different domains (e.g., a scheduling domain, a travel reservation domain, a movie ticket domain, etc.), in addition to restaurant reservation domain 762 and reminder domain 764.

While FIG. 7C illustrates two example domains within ontology 760, other domains include, for example, "find a movie," "initiate a phone call," "find directions," "schedule a meeting," "send a message," "search the web," "provide an answer to a question," "read a list," "providing navigation instructions," "provide instructions for a task" and so on. A "send a message" domain is associated with a "send a message" actionable intent node, and further includes property nodes such as "recipient(s)," "message type," and "message body." The property node "recipient" is further defined, for example, by the sub-property nodes such as "recipient name" and "message address."

In some examples, ontology 760 includes all the domains (and hence actionable intents) that the digital assistant is capable of understanding and acting upon. In some examples, ontology 760 is modified, such as by adding or removing entire domains or nodes, or by modifying relationships between the nodes within the ontology 760.

In some examples, nodes associated with multiple related actionable intents are clustered under a "super domain" in ontology 760. For example, a "travel" super-domain includes a cluster of property nodes and actionable intent nodes related to travel. The actionable intent nodes related to travel includes "airline reservation," "hotel reservation," "car rental," "get directions," "find points of interest," and so on. Other examples of "super-domain" includes "calendar," "movies," "music," and "maps," which can each include multiple actionable intent nodes (e.g., "search movie show times," "search movie reviews," "search calendar events," or "create calendar event). The actionable intent nodes under the same super domain (e.g., the "travel" super domain) have many property nodes in common. For example, the actionable intent nodes for "airline reservation," "hotel reservation," "car rental," "get directions," and "find points of interest" share one or more of the property nodes "start location," "destination," "departure date/time," "arrival date/time," and "party size."

In some examples, each node in ontology 760 is associated with a set of words and/or phrases that are relevant to the property or actionable intent represented by the node. The respective set of words and/or phrases associated with each node are the so-called "vocabulary" associated with the node. The respective set of words and/or phrases associated with each node are stored in vocabulary index 744 in association with the property or actionable intent represented by the node. For example, returning to FIG. 7B, the vocabulary associated with the node for the property of "restaurant" includes words such as "food," "drinks," "cuisine," "hungry," "eat," "pizza," "fast food," "meal," and so on. For another example, the vocabulary associated with the node for the actionable intent of "initiate a phone call" includes words and phrases such as "call," "phone," "dial," "ring," "call this number," "make a call to," and so on. The vocabulary index 744 optionally includes words and phrases in different languages.

Natural language processing module 732 receives the candidate text representations (e.g., text string(s) or token sequence(s)) from STT processing module 730, and for each candidate representation, determines what nodes are implicated by the words in the candidate text representation. In some examples, if a word or phrase in the candidate text representation is found to be associated with one or more nodes in ontology 760 (via vocabulary index 744), the word or phrase "triggers" or "activates" those nodes. Based on the quantity and/or relative importance of the activated nodes, natural language processing module 732 selects one of the actionable intents as the task that the user intended the digital assistant to perform. In some examples, the domain that has the most "triggered" nodes is selected. In some examples, the domain having the highest confidence value (e.g., based on the relative importance of its various triggered nodes) is selected. In some examples, the domain is selected based on a combination of the number and the importance of the triggered nodes. In some examples, additional factors are considered in selecting the node as well, such as whether the digital assistant has previously correctly interpreted a similar request from a user.

User data 748 includes user-specific information, such as user-specific vocabulary, user preferences, user address, user's default and secondary languages, user's contact list, and other short-term or long-term information for each user. In some examples, natural language processing module 732 uses the user-specific information to supplement the information contained in the user input to further define the user intent. For example, for a user request "invite my friends to my birthday party," natural language processing module 732 is able to access user data 748 to determine who the "friends" are and when and where the "birthday party" would be held, rather than requiring the user to provide such information explicitly in his/her request.

It should be recognized that in some examples, natural language processing module 732 is implemented using one or more machine learning mechanisms (e.g., neural networks). In particular, the one or more machine learning mechanisms are configured to receive a candidate text representation and contextual information associated with the candidate text representation. Based on the candidate text representation and the associated contextual information, the one or more machine learning mechanism are configured to determine intent confidence scores over a set of candidate actionable intents. Natural language processing module 732 can select one or more candidate actionable intents from the set of candidate actionable intents based on the determined intent confidence scores. In some examples, an ontology (e.g., ontology 760) is also used to select the one or more candidate actionable intents from the set of candidate actionable intents.

Other details of searching an ontology based on a token string are described in U.S. Utility Application Serial No. 12/341,743 for "Method and Apparatus for Searching Using An Active Ontology," filed December 22, 2008.

In some examples, once natural language processing module 732 identifies an actionable intent (or domain) based on the user request, natural language processing module 732 generates a structured query to represent the identified actionable intent. In some examples, the structured query includes parameters for one or more nodes within the domain for the actionable intent, and at least some of the parameters are populated with the specific information and requirements specified in the user request. For example, the user says "Make me a dinner reservation at a sushi place at 7." In this case, natural language processing module 732 is able to correctly identify the actionable intent to be "restaurant reservation" based on the user input. According to the ontology, a structured query for a "restaurant reservation" domain includes parameters such as {Cuisine}, {Time}, {Date}, {Party Size}, and the like. In some examples, based on the speech input and the text derived from the speech input using STT processing module 730, natural language processing module 732 generates a partial structured query for the restaurant reservation domain, where the partial structured query includes the parameters {Cuisine = "Sushi"} and {Time = "7pm"}. However, in this example, the user's utterance contains insufficient information to complete the structured query associated with the domain. Therefore, other necessary parameters such as {Party Size} and {Date} is not specified in the structured query based on the information currently available. In some examples, natural language processing module 732 populates some parameters of the structured query with received contextual information. For example, in some examples, if the user requested a sushi restaurant "near me," natural language processing module 732 populates a {location} parameter in the structured query with GPS coordinates from the user device.

In some examples, natural language processing module 732 identifies multiple candidate actionable intents for each candidate text representation received from STT processing module 730. Further, in some examples, a respective structured query (partial or complete) is generated for each identified candidate actionable intent. Natural language processing module 732 determines an intent confidence score for each candidate actionable intent and ranks the candidate actionable intents based on the intent confidence scores. In some examples, natural language processing module 732 passes the generated structured query (or queries), including any completed parameters, to task flow processing module 736 ("task flow processor"). In some examples, the structured query (or queries) for the m-best (e.g., m highest ranked) candidate actionable intents are provided to task flow processing module 736, where m is a predetermined integer greater than zero. In some examples, the structured query (or queries) for the m-best candidate actionable intents are provided to task flow processing module 736 with the corresponding candidate text representation(s).

Other details of inferring a user intent based on multiple candidate actionable intents determined from multiple candidate text representations of a speech input are described in U.S. Utility Application Serial No. 14/298,725 for "System and Method for Inferring User Intent From Speech Inputs," filed June 6, 2014.

Task flow processing module 736 is configured to receive the structured query (or queries) from natural language processing module 732, complete the structured query, if necessary, and perform the actions required to "complete" the user's ultimate request. In some examples, the various procedures necessary to complete these tasks are provided in task flow models 754. In some examples, task flow models 754 include procedures for obtaining additional information from the user and task flows for performing actions associated with the actionable intent.

As described above, in order to complete a structured query, task flow processing module 736 needs to initiate additional dialogue with the user in order to obtain additional information, and/or disambiguate potentially ambiguous utterances. When such interactions are necessary, task flow processing module 736 invokes dialogue flow processing module 734 to engage in a dialogue with the user. In some examples, dialogue flow processing module 734 determines how (and/or when) to ask the user for the additional information and receives and processes the user responses. The questions are provided to and answers are received from the users through I/O processing module 728. In some examples, dialogue flow processing module 734 presents dialogue output to the user via audio and/or visual output, and receives input from the user via spoken or physical (e.g., clicking) responses. Continuing with the example above, when task flow processing module 736 invokes dialogue flow processing module 734 to determine the "party size" and "date" information for the structured query associated with the domain "restaurant reservation," dialogue flow processing module 734 generates questions such as "For how many people?" and "On which day?" to pass to the user. Once answers are received from the user, dialogue flow processing module 734 then populates the structured query with the missing information, or pass the information to task flow processing module 736 to complete the missing information from the structured query.

Once task flow processing module 736 has completed the structured query for an actionable intent, task flow processing module 736 proceeds to perform the ultimate task associated with the actionable intent. Accordingly, task flow processing module 736 executes the steps and instructions in the task flow model according to the specific parameters contained in the structured query. For example, the task flow model for the actionable intent of "restaurant reservation" includes steps and instructions for contacting a restaurant and actually requesting a reservation for a particular party size at a particular time. For example, using a structured query such as: {restaurant reservation, restaurant = ABC Cafe, date = 3/12/2012, time = 7pm, party size = 5}, task flow processing module 736 performs the steps of: (1) logging onto a server of the ABC Cafe or a restaurant reservation system such as OPENTABLE^{®}, (2) entering the date, time, and party size information in a form on the website, (3) submitting the form, and (4) making a calendar entry for the reservation in the user's calendar.

In some examples, task flow processing module 736 employs the assistance of service processing module 738 ("service processing module") to complete a task requested in the user input or to provide an informational answer requested in the user input. For example, service processing module 738 acts on behalf of task flow processing module 736 to make a phone call, set a calendar entry, invoke a map search, invoke or interact with other user applications installed on the user device, and invoke or interact with third-party services (e.g., a restaurant reservation portal, a social networking website, a banking portal, etc.). In some examples, the protocols and application programming interfaces (API) required by each service are specified by a respective service model among service models 756. Service processing module 738 accesses the appropriate service model for a service and generate requests for the service in accordance with the protocols and APIs required by the service according to the service model.

For example, if a restaurant has enabled an online reservation service, the restaurant submits a service model specifying the necessary parameters for making a reservation and the APIs for communicating the values of the necessary parameter to the online reservation service. When requested by task flow processing module 736, service processing module 738 establishes a network connection with the online reservation service using the web address stored in the service model, and send the necessary parameters of the reservation (e.g., time, date, party size) to the online reservation interface in a format according to the API of the online reservation service.

In some examples, natural language processing module 732, dialogue flow processing module 734, and task flow processing module 736 are used collectively and iteratively to infer and define the user's intent, obtain information to further clarify and refine the user intent, and finally generate a response (i.e., an output to the user, or the completion of a task) to fulfill the user's intent. The generated response is a dialogue response to the speech input that at least partially fulfills the user's intent. Further, in some examples, the generated response is output as a speech output. In these examples, the generated response is sent to speech synthesis processing module 740 (e.g., speech synthesizer) where it can be processed to synthesize the dialogue response in speech form. In yet other examples, the generated response is data content relevant to satisfying a user request in the speech input.

In examples where task flow processing module 736 receives multiple structured queries from natural language processing module 732, task flow processing module 736 initially processes the first structured query of the received structured queries to attempt to complete the first structured query and/or execute one or more tasks or actions represented by the first structured query. In some examples, the first structured query corresponds to the highest ranked actionable intent. In other examples, the first structured query is selected from the received structured queries based on a combination of the corresponding speech recognition confidence scores and the corresponding intent confidence scores. In some examples, if task flow processing module 736 encounters an error during processing of the first structured query (e.g., due to an inability to determine a necessary parameter), the task flow processing module 736 can proceed to select and process a second structured query of the received structured queries that corresponds to a lower ranked actionable intent. The second structured query is selected, for example, based on the speech recognition confidence score of the corresponding candidate text representation, the intent confidence score of the corresponding candidate actionable intent, a missing necessary parameter in the first structured query, or any combination thereof.

Speech synthesis processing module 740 is configured to synthesize speech outputs for presentation to the user. Speech synthesis processing module 740 synthesizes speech outputs based on text provided by the digital assistant. For example, the generated dialogue response is in the form of a text string. Speech synthesis processing module 740 converts the text string to an audible speech output. Speech synthesis processing module 740 uses any appropriate speech synthesis technique in order to generate speech outputs from text, including, but not limited, to concatenative synthesis, unit selection synthesis, diphone synthesis, domain-specific synthesis, formant synthesis, articulatory synthesis, hidden Markov model (HMM) based synthesis, and sinewave synthesis. In some examples, speech synthesis processing module 740 is configured to synthesize individual words based on phonemic strings corresponding to the words. For example, a phonemic string is associated with a word in the generated dialogue response. The phonemic string is stored in metadata associated with the word. Speech synthesis processing module 740 is configured to directly process the phonemic string in the metadata to synthesize the word in speech form.

In some examples, instead of (or in addition to) using speech synthesis processing module 740, speech synthesis is performed on a remote device (e.g., the server system 108), and the synthesized speech is sent to the user device for output to the user. For example, this can occur in some implementations where outputs for a digital assistant are generated at a server system. And because server systems generally have more processing power or resources than a user device, it is possible to obtain higher quality speech outputs than would be practical with client-side synthesis.

Additional details on digital assistants can be found in the U.S. Utility Application No. 12/987,982, entitled "Intelligent Automated Assistant," filed January 10, 2011, and U.S. Utility Application No. 13/251,088, entitled "Generating and Processing Task Items That Represent Tasks to Perform," filed September 30, 2011.

Referring back to FIG. 7B, in some examples, digital assistant module 726 receives a user utterance. The user utterance is, for example, one turn of a multi-turn dialogue conversation between the user and digital assistant system 700. STT processing module 730 determines candidate text representations corresponding to the user utterance and provides the candidate text representations to natural language processing module 732. Natural language processing module 732, using ontology 760, vocabulary 744, and user data 748, parses each candidate text representation from STT processing module 730 to determine semantic interpretations for the candidate text representation. The semantic interpretations include, for example, one or more user intents. Specifically, the semantic interpretations include candidate domains (and/or candidate super-domains) and candidate parse interpretations for the candidate text representation. In some examples, semantic interpretations comprise an internal representation (e.g., vector representation) of the candidate domains and candidate parse interpretations for the candidate text representation. For instance, in one example, natural language processing module 732 parses the candidate text representation "Directions to Fidelity investments" for a corresponding user utterance to determine candidate domains and candidate parse interpretations. In this example, the candidate domains determined for this candidate text representation can include the "get directions" domain and the "search the web" domain. The candidate parse interpretations for this candidate text representation include interpreting "Fidelity investments" as a value for the "contacts" property, the "business" property, or the "address" property of the "get directions" domain.

In another example, natural language processing module 732 parses the candidate text representation "Reviews for Frozen" for a corresponding user utterance. In this example, the candidate domains determined for this candidate text representation can include the "search movies" domain, the "search restaurants" domain, and the "search music" domain. In addition, the candidate parse interpretations for this candidate text representation can include interpreting "Frozen" as a value for the "movie title" property, the "restaurant name" property, or the "album name" property for the respective candidate domains.

In some examples, natural language processing module 732 provides the semantic interpretations (e.g., the candidate domains and the candidate parse interpretations) for the candidate text representations to belief tracker processing module 766. In addition, natural language processing module 732 provides associated confidence scores for each of the semantic interpretations to belief tracker processing module 766. Using the semantic interpretations and the associated confidence scores, belief tracker processing module 766 determines a current belief state. The belief state is an internal representation of the relevant possible user intents (e.g., the n-best user intents) that correspond to the user utterance. The belief state describes the current state of the dialogue given previous and current observations of the dialogue. The belief state can also be referred to as a dialogue state. The observations include, for example, speech recognition results (e.g., candidate text representations and associated speech recognition confidence scores) and natural language processing results (e.g., candidate user intents, semantic interpretations, and associated intent confidence scores). In some examples, the observations further include contextual information (context data) associated with the current user utterances and/or previous user utterances in the dialogue conversation. Thus, in some examples, belief tracker processing module 766 further utilizes contextual information, information from the dialogue history (e.g., previous utterances in the dialogue conversation), previous belief states, or any combination thereof to determine the current belief state. The previous belief state is the internal representation of the previous state of the dialogue based on one or more user utterances of the dialogue conversation received prior to the current user utterance. The observations can be represented in individual dialogue slots of the belief state. In some examples, some dialogue slots of the belief state represent information that is required to fulfill the respective user intent.

In some examples, belief tracker processing module 766 generates the belief state using belief models 768. In some examples, belief models 768 consider the user intent and other aspects of the environment as partially observable random variables which are inferred from observations. The belief models 768 determine the probability distributions over the random variables using Bayesian networks, for example. In some examples, the belief models 768 include one or more machine learning mechanisms (e.g., neural networks). In some examples, the belief state is implemented using partially observable Markov decision processes (POMDPs), which can track user intents over each turn of the dialogue conversation. The POMDPs can maintain the probability distributions over a set of states based on previous and current observations, and update the probability distribution based on each subsequent observation (e.g., subsequent user utterance).

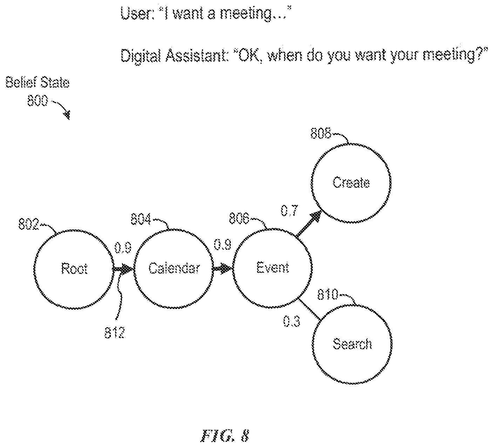

FIG. 8 illustrates a portion of belief state 800, according to various examples. Belief state 800 is generated, for example, using belief tracker processing module 766, and represents relevant possible user intents (user goals) for the user utterance "I want a meeting...." As shown, belief state 800 includes dialogue slots (e.g., dialogue slot 802) that are connected together (e.g., by connections 812) in a hierarchical tree arrangement. Each dialogue slot represents a possible variable and includes knowledge obtained from observations (e.g., speech recognition results, natural language processing results, context data, etc.) of the dialogue. For instance, in this example, natural language processing module 732 parses the text representation "I want a meeting" and determines that the text representation relates to the "calendar" super domain, the "create event" actionable intent, and the "search event" actionable intent. Using these results from natural language processing module 732, belief tracker processing module 766 constructs belief state 800 to represent the current state of the dialogue. As shown, "calendar" super domain is represented by dialogue slot 804. The "create event" and "search event" actionable intents are represented by dialogue slots 806, 808, and 810. The paths from the root dialogue slot to one or more leaf dialogue slots (terminal nodes) represent a possible user intent or goal for the user utterance. For example, as highlighted with bold arrows on belief state 800, the path from slot 802 to slot 808 represents the possible user intent of creating a calendar event.

Belief state 800 further includes probability distributions over the possible values for each variable. The probability distributions represent the uncertainties for each dialogue slot. In some examples, the probability distributions are based on the intent confidence scores obtained from natural language processing module 732. As shown in FIG. 8, dialogue slot 804 is associated with the probability 0.9 that the user utterance relates to the "calendar" super domain. Other possible values for this variable can include "travel" or "movies," which may each be represented by a separate dialogue slot (not shown) and have probabilities of 0.05, for example. Similarly, dialogue slots 808 and 810 are associated with the probabilities 0.7 and 0.3, respectively. These probabilities represent the likelihood the user is requesting that a calendar event be created or searched. Based on these probability distributions, cumulative probabilities can be determined for each possible user intent represented by belief state 800. Specifically, for the user intent of creating a calendar event, the associated cumulative probability is determined based on the probabilities associated with the dialogue slots 802, 804, 806, and 808. Maintaining probability distributions over all states can enable all possible dialogue paths to be pursued in parallel. This can be desirable because the determined policy action need not be based on the most likely dialogue state but rather on the probability distribution across all possible dialogue states. This can improve the accuracy and robustness of the selection process for policy actions.

It should be appreciated that at least some of the dialogue slots of the belief state can represent similar or identical domains, concepts, or properties of respective nodes in the ontology (e.g., ontology 760). However, the belief state does not include all domains, concepts, and properties represented in the ontology. In particular, policy determination would be intractable if all possible user intents from the ontology were represented in the belief state. Rather, in some examples, belief tracker processing module 766 constructs the belief state based on only a subset of the ontology nodes that represent the most relevant user intents given the text representations of the user utterance. A compact representation for the belief state that embodies only the most relevant domains (e.g., n-best user intents) can enable tractable policy algorithms for policy decision processing module 770.

Belief tracker processing module 766 provides the belief state to policy decision processing module 770. Using policy models 772, policy decision processing module 770 maps the belief state to a plurality of candidate policy actions. Each candidate policy action represents a set of one or more actions to be performed by the device to satisfy one or more possible user intents represented by the belief state. The set of one or more actions includes, for example, the actions of generating and outputting suitable dialogue that is responsive to the user utterance. In some examples, the set of one or more actions represented by a candidate policy action is a predetermined set of one or more actions. Further, in some examples, the plurality of candidate policy actions are a subset of all possible policy actions that can be performed by digital assistant system 700. The plurality of candidate policy actions determined by policy decision processing module 770 can represent policy actions that are most likely to achieve the greatest cumulative reward for the entire dialogue. In this way, policy decision processing module 770 need only select from a small subset of all possible policy actions, which can enable a more efficient and accurate selection process.

As depicted in FIG. 8, belief state 800 represents a first possible user intent of creating a calendar event (e.g., dialogue slots 802, 804, 806, and 808) and a second possible user intent of searching for a calendar event (e.g., dialogue slots 802, 804, 806, and 810). In this example, policy decision processing module 770 can map belief state 800 to a plurality of candidate policy actions that would satisfy the first possible user intent and/or the second possible intent. For example, a first candidate policy action of the plurality of candidate policy actions can include prompting the user for information to create an event (e.g., "When do you want to create your event?"). Notably, this first candidate policy action assumes that the actual user intent is to create a calendar event. Additionally, a second candidate policy action of the plurality of candidate policy actions can include confirming with the user whether he or she would like to create a calendar event (e.g., "Would you like to create a calendar event for a meeting?"). Other non-limiting examples of candidate policy actions include offering to perform a specific action (e.g., "Shall I schedule a meeting at 3pm?"), reporting the performance of an action (e.g., "OK, I've scheduled a meeting at 3pm"), providing a summary of results from performing an action (e.g., "I've found one meeting in your calendar at 3pm"), or providing instructions to the user on how to better operate the digital assistant user dialogue input (e.g., "When creating a calendar event, you can specify the date, time, and attendees").

Policy models 772 are configured to receive, as input, a belief state and provide a plurality of corresponding candidate policy actions. In some examples, policy models 772 include a set of predefined deterministic rules for determining the plurality of candidate policy actions given the belief state. In some examples, policy models 772 include stochastic models for determining probability distributions over candidate policy actions. In some examples, policy models 772 include one or more machine learning mechanisms (e.g., neural networks). Specifically, in some examples, policy models 772 are constructed using POMDPs.

Policy decision processing module 770 determines which policy action of the plurality of candidate policy actions should be performed. Specifically, based on the belief state, policy decision processing module 770 selects a suitable policy action from the plurality of candidate policy actions to be performed by the device. In some examples, policy decision processing module 770 determines, using policy models 772, a probability distribution over the plurality of candidate policy actions. In some examples, policy decision processing module 770 selects the policy action having the highest probability value among the plurality of candidate policy actions. In some examples, policy decision processing module 770 applies reinforcement learning techniques to select the policy action to perform. In examples where policy decision processing module 770 utilizes POMDPs, a policy action is selected from the set of candidate actions by solving the POMDPs. Specifically, policy decision processing module 770 applies, using policy models 772, a reward function (e.g. Q-function for Q-learning) to each candidate policy action and the policy action that is predicted to maximize the reward function (e.g., the total reward over the entire dialogue) is selected.

In some examples, policy models 772 include a set of parameter values. The parameter values can also be referred to as weights. The parameter values are used to map the belief state to the plurality of candidate policy actions. In addition, the parameter values of policy models 772 are used to select the suitable policy action from the plurality of candidate policy actions.

Policy decision processing module 770 provides the selected policy action to task flow processing module 736 to execute. The selected policy action represents a set of one or more actions and the steps that the digital assistant performs to achieve a predicted user intent. Task flow processing module 736 is configured to receive the selected policy action from policy decision processing module 770 and perform the set of one or more actions represented by the selected policy action. In some examples, the set of one or more actions corresponding to the selected policy action is determined from task flow models 754. In some examples, task flow models 754 include procedures for obtaining additional information from the user and for performing actions represented by the selected policy model. In some examples, the set of one or more actions includes generating and outputting dialogue that is responsive to the user utterance. In these examples, task flow processing module 736 invokes dialogue flow processing module 734 to generate and output the appropriate dialogue.

For example, referring back to FIG. 8, the selected policy action for belief state 800 represents the action of prompting the user for additional information to create a calendar event. In this example, task flow processing module 736 performs a series of actions that includes generating (e.g., in conjunction with dialogue flow processing module 734) the output dialogue "OK, when do you want your meeting?" and outputting a spoken representation of the output dialogue to the user. It should be recognized that digital assistant system 700 can receive and process subsequent user utterances in subsequent turns of the same dialogue. For each subsequent user utterance, an updated belief state is determined by belief tracker processing module 766 and a respective policy action is selected by policy decision processing module 770. In some examples, the updated belief state is determined based on the previous belief state. In particular, information obtained from previous user utterances of the same dialogue is retained in respective dialogue slots of the updated belief state. For example, the actionable intents of creating a calendar event and searching for a calendar event can be maintained in the updated belief state with additional information (e.g., the time and day of the meeting) added based on the subsequent user utterance and subsequent observations. In addition, the probability distributions for the dialogue slots can be updated based on the subsequent user utterance and subsequent observations.

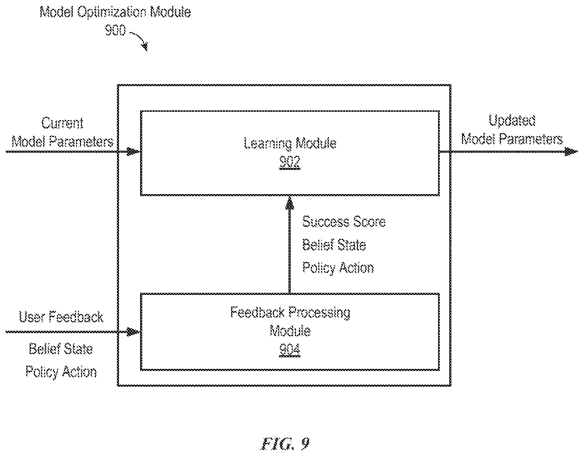

FIG. 9 illustrates an exemplary block diagram of model optimization module 900, according to various examples. In some examples, model optimization module 900 is implemented using a digital assistant system (e.g., digital assistant system 700). In some examples, memory 702 (FIG. 7A) includes model optimization module 900. Model optimization module 900 is configured to perform model optimization functionalities, such as optimizing belief models (e.g., belief models 768) and/or policy models (e.g., policy models 772) of a digital assistant system. Specifically, in some examples, model optimization module 900 is configured to perform processes for optimizing dialogue policy decisions for digital assistants using implicit feedback (e.g., process 1000), as described herein. It should be recognized that model optimization module 900 need not be implemented as a separate software program, procedure, or module, and thus, various subsets of the module are, optionally, combined or otherwise rearranged in various embodiments.

As shown in FIG. 9, model optimization module 900 includes learning module 902 and feedback processing module 904. In some examples, model optimization module 900 operates in conjunction with a digital assistant module (e.g., digital assistant module 726) to optimize one or more models (e.g., the belief models and/or policy models) of the digital assistant module. In particular, in response to receiving a user utterance, the digital assistant module determines a belief state (e.g., belief state 800) and selects a corresponding policy action (e.g., from policy decision processing module 770) to be performed by the digital assistant system. The belief state is determined and the policy action is selected using the model parameters (weights) of the current belief models (e.g., belief models 768) and policy models (policy models 772). The digital assistant system then performs the policy action, including outputting results of the policy action for presentation to the user. Outputting the results includes, for example, providing, to the user, an output dialogue that is responsive to the user utterance. The output dialogue can be a prompt for additional information. Alternatively, the output dialogue can be a statement confirming the actions performed or summarizing the results obtained. In some examples, outputting the results includes displaying results (e.g., search results, requested data, etc.) on the device.

In some examples, the user provides feedback to the digital assistant system in response to the performance of the policy action. The user feedback can be explicit or implicit feedback. Feedback processing module 904 receives the user feedback via the digital assistant system. In some examples, feedback processing module 904 additionally receives representations of the belief state and the policy action that correspond to the user feedback. Based on the user feedback (and optionally the belief state and/or policy action), feedback processing module 904 determines a corresponding success score. The success score represents the degree that the performed policy action concurs with the user's actual desired goal for the user utterance. For example, user feedback indicating that the performed policy action satisfied the user's actual desired goal would result in a higher determined success score. Conversely, user feedback indicating that the performed policy action failed to satisfy the user's actual desired goal would result in a lower determined success score. In some examples, the success score is a binary score where one value (e.g., +1) indicates positive user feedback (e.g., policy action corresponds to the user's actual desired goal) and another value (e.g., -1) indicates negative user feedback (e.g., policy action does not correspond to the user's desired goal). In other examples, the success score is a continuous value over a predetermined range (e.g., 0-100) where a higher score indicates more positive user feedback. In some examples, the success score is a reward score for reinforcement learning that defines the reward for being in the respective belief state and selecting a respective policy action.

In some examples, feedback processing module 904 implements deterministic rules to interpret user feedback and label the user feedback with an associated success score. In other examples, feedback processing module 904 implements one or more statistical models or machine learning mechanisms (e.g., neural networks) to determine a success score for user feedback. In some examples, feedback processing module 904 determines whether the received user feedback matches one of a plurality of predetermined types of user input. For instance, in a specific example, feedback processing module 904 determines whether the received user feedback includes either user input that modifies one or more properties (e.g., calendar event time, contact name, message recipient, etc.) of the performed policy action or a second user utterance that matches the current user utterance within a predetermined threshold (e.g., by comparing acoustic or linguistic features). Based on the determination of whether the received user feedback matches one of a plurality of predetermined types of user input, a corresponding success score is determined. The success score can be a reward score that is used in reinforcement learning. In some examples, feedback processing module 904 provides the success score to learning module 902 to optimize one or more models. In addition, feedback processing module 904 provides the corresponding belief state and policy action to learning module 902 to optimize the one or more models.

Learning module 902 receives the success score from feedback processing module 904 and updates the parameter values (weights) of one or more models of the digital assistant module. For example, using the success score, learning module 902 optimizes the current parameter values for the policy model (policy models 772) of the digital assistant module to determine updated parameter values for the policy model. Specifically, learning module 902 modifies the current parameter values for the policy model in accordance with the success score. In some examples, the current parameter values for the policy model are optimized by maximizing the expected accumulated sum of the success score for the dialogue. In some examples, using the success score as a reward score, learning module 902 applies reinforcement learning techniques to optimize the current parameter values for the policy model. In these examples, learning module 902 implements a Q-learning algorithm to determine updated parameter values for the policy model. The updated parameter values can be parameter values of a reward function (Q-function). It should be recognized that learning modules 902 can alternatively apply other supervised or unsupervised machine learning techniques to optimize the current parameter values for the policy model. In addition, one skilled in the art would appreciate that learning module 902 can be configured to optimize the parameter values of other models of the digital assistant module (e.g., the belief model) using the success score.

In a specific example, in accordance with a determination that, after performing the policy action, either one or more properties (e.g., calendar event time, contact name, message recipient, etc.) of the performed policy action are modified by the user or a second user utterance that matches the user utterance within a predetermined threshold is received, the parameter values (weights) of the policy model are modified. Specifically, in this example, the parameter values of the policy model are modified such that the parameter values corresponding to the performed policy action given the belief state are decreased with respect to the parameter values corresponding to the policy actions other than the performed policy action. Thus, given the same belief state, the modified parameter values would be less likely to select the performed policy action relative to one or more other candidate policy actions compared to the parameter values prior to modification.

Returning to the example where the user utterance is "I want a meeting... " (e.g., corresponding to belief state 800) and the selected policy action includes providing the output dialogue "OK, when do you want your meeting?", the user can provide feedback in response to the output dialogue. In one example, the user can respond to the digital assistant with a second user utterance "3pm." In this example, feedback processing module 904 can determine that the user provided positive feedback because the user provided a suitable response to the prompt. Thus, based on the second user utterance, feedback processing module 904 can generate a corresponding success score (e.g., +1) indicating positive user feedback. Based on this success score, learning module 902 can modify the current parameter values for the policy model such that given belief state 800, the policy action of providing the output dialogue "OK, when do you want your meeting?" is more likely to be selected relative to other candidate policy actions. Alternatively, in another example, the user can response to the output dialogue "OK, when do you want your meeting?" by providing user input that invokes the calendar application of the electronic device. The user input can cause a user interface of the calendar application to be displayed and, in some examples, further cause previously scheduled calendar events to be displayed. In this example, feedback processing module 904 can determine that the user provided negative feedback because the user did not respond to the prompt, but instead invoked the calendar application. Thus, based on the user input, feedback processing module 904 can generate a corresponding success score (e.g., -1) indicating negative user feedback. Based on this success score, learning module 902 can modify the current parameter values for the policy model such that given belief state 800, the policy action of providing the output dialogue "OK, when do you want your meeting?" is less likely to be selected relative to other candidate policy actions.

In some examples, feedback processing module 904 collects a plurality of success scores before providing the success scores to learning module 902 for model optimization. In particular, feedback processing module 904 includes a success score log (not shown) for storing a plurality of success scores. Each success score of the collected plurality of success scores corresponds to respective user feedback that was detected by the digital assistant system upon performing a respective policy action for a respective user utterance. Further, each respective policy action is determined using the current set of parameter values of the policy model. The plurality of success scores are stored in the success score log with corresponding belief states and policy actions. In some examples, learning module 902 obtains the plurality of success scores (and corresponding belief states and policy actions) from the success score log of feedback processing module 904 and utilizes the plurality of success scores to update the parameter values of one or more models (e.g., the belief models and/or policy models) of the digital assistant module. 4. Process for optimizing dialogue policy decisions for digital assistants using implicit feedback

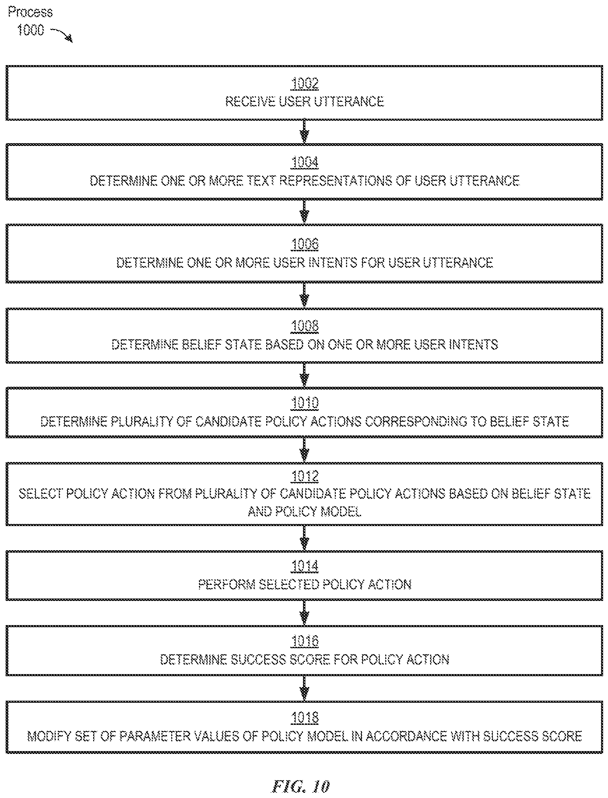

FIG. 10 illustrates process 1000 for optimizing policy decisions for digital assistants using implicit feedback according to an embodiment of the present invention. Process 1000 is performed using one or more electronic devices implementing a digital assistant. In some examples, process 1000 is performed using a client-server system (e.g., system 100), and the blocks of process 1000 are divided up in any manner between the server (e.g., DA server 106) and a client device. In other examples, the blocks of process 1000 are divided up between the server and multiple client devices (e.g., a mobile phone and a smart watch). Thus, while portions of process 1000 are described herein as being performed by particular devices of a client-server system, it will be appreciated that process 1000 is not so limited. In other examples, process 1000 is performed using only a client device (e.g., user device 104) or only multiple client devices. In process 1000, some blocks are, optionally, combined, the order of some blocks is, optionally, changed, and some blocks are, optionally, omitted. In some examples, additional steps can be performed in combination with process 1000.

At block 1002, a user utterance is received (e.g., at I/O processing module 728 and via microphone 213). The user utterance comprises user speech from one turn of a multi-turn dialogue conversation between the user and the digital assistant system (e.g., digital assistant system 700). In some examples, the user utterance represents at least a portion of a user request for the digital assistant device to perform one or more tasks. In some examples, the user utterance is the first turn of a multi-turn dialogue conversation (e.g., "Hey Siri, I'd like to schedule a meeting"). In other examples, the user utterance is responsive to a prompt or query from the digital assistant. For example, the digital assistant system can provide the prompt "OK, when would you like to schedule your meeting?". In this example, the user utterance can be "3pm," which is responsive to the prompt. The user utterance can include speech in unstructured natural language form.

At block 1004, one or more text representations of the user utterance are determined. The one or more text representations are determined by performing speech recognition on the user utterance (e.g., using STT processing module 730). Each text representation is a textual interpretation of the user utterance and has an associated speech recognition confidence score.

At block 1006, one or more user intents corresponding to the user utterance are determined based on one or more text representations of the user utterance. The one or more user intents are determined by performing natural language processing on the one or more text representations (e.g., using natural language processing module 732). Specifically, each text representation is parsed and one or more portions of the text representation are mapped to one or more properties of one or more domains. Based on the mapping, the one or more user intents are determined. Thus, the one or more user intents can represent semantic interpretations of the one or more text representations. In particular, each user intent includes, for example, a determined domain (or super domain) for the respective text representation and related parse interpretations that assign values to relevant concepts and/or properties of the determined domain. The assigned values can correspond to portions of the respective text representation. For example, given one or more text representations for the utterance "I want a meeting at 3pm," process 1000 can determines one or more user intents that include the "calendar" domain and a parse interpretation that assigns the value "3pm" to the "time" property of the "calendar domain." In another example, given one or more text representations of the utterance "Directions to Fidelity investments," process 1000 determines one or more user intents that include the "get directions" domain and parse interpretations that assign the value "Fidelity investments" to each of the "contacts" and "business" properties of the "get directions" domain. In some examples, each determined user intent includes an associated intent confidence score. Further, the domains and parse interpretations of the one or more user intents can also include associated confidence scores.

At block 1008, a belief state for the one or more user intents is determined (e.g., using belief tracker processing module 766 and/or belief models 768). The belief state (e.g., belief state 800) is an internal representation of the relevant possible user intents that correspond to the user utterance. In particular, the belief state includes a plurality of dialogue slots and uncertainties (e.g., probability distributions) associated with the plurality of dialogue slots. A subset of the plurality of dialogue slots represents a respective user intent. Process 1000 determines the belief state using the semantic interpretations determined at block 1006. In particular, the belief state is constructed based on the determined domains and parse interpretations for the one or more text representations. In addition, in some examples, context data inferred by the digital assistant system is used to determine the belief state.

As discussed, the belief state includes a plurality of dialogue slots that are connected in a hierarchical arrangement. Some of the dialogue slots represent domains, concepts, or properties of the one or more user intents. Further, some of the dialogue slots include possible values for the one or more domains, concepts, or properties. The possible values are based on, for example, the parse interpretations of block 1006 and can include one or more portions of the text representations. For instance, returning to the example utterance "I want a meeting at 3pm," the belief state determined for this utterance can include a dialogue slot representing the "calendar" domain, one or more dialogue slots representing the "create event" actionable intent, and a dialogue slot representing the "time" property for the "calendar" domain. Additionally, the dialogue slot representing the "time" property can include the possible value "3pm" and a probability for this value.

The belief state is determined based on a previous belief state. In particular, the previous belief state describes the previous state of the dialogue prior to receiving the current user utterance of block 1002. The previous belief state can thus be based on one or more previous user utterances of the dialogue and/or one or more previous responses provided by the digital assistant system. Determining the belief state includes updating the previous belief state with current information and/or observations obtained based on the current user utterance of block 1002.

In some examples, the belief state is determined based on the speech recognition confidence scores of the one or more text representations and/or the intent confidence scores of the one or more user intents. For example, the one or more user intents of block 1006 can be the m-best user intents (e.g., top n user intents with the m-highest confidence scores) selected from all possible user intents. Further, in some examples, the dialogue slots of the belief state include probability distributions over the possible values for each variable represented by the dialogue slots. For example, in the determined belief state for the example utterance "I want a meeting at 3pm," a dialogue slot representing the "time" property of the "calendar" domain can include the probability distributions over possible time values (e.g., 2pm, 3pm, 4pm, etc.) for the "time" property. In some examples, the probability distributions are based on the speech recognition confidence scores and/or the intent confidence scores.

Although the dialogue slots of the belief state can represent domains, concepts, and/or properties that correspond to the nodes of an ontology (e.g., ontology 760), it should be recognized that, in some examples, the belief state is separate and distinct from the ontology. Specifically, in these examples, the belief state is not an ontology and the slots of the belief state are not nodes of an ontology. For instance, in some examples, the dialogue slots of the belief state represent domains, concepts, and/or properties of only a relevant subset of the ontology. Moreover, in some examples, certain dialogue slots of the belief state do not correspond to any domain, concept, or property of the ontology. For example, one or more dialogue slots can represent the action of searching for a value for a specific property. Specifically, if the user utterance were "Call my mom," the determined belief state can include a dialogue slot representing the action of searching the user's contacts for a phone number (property = phone number) corresponding to "mom."

At block 1010, a plurality of candidate policy actions that correspond to the belief state are determined, wherein a policy model maps the belief state to the plurality of candidate policy actions. In some examples, the plurality of candidate policy actions are selected from a large population of predetermined policy actions based on the belief state. The plurality of candidate policy actions are each policy actions that, when performed, would satisfy a user intent of the one or more user intents represented by the belief state. In some examples, the policy model has a set of current parameter values. The parameter values can be referred to as weights. The set of current parameter values is used to map the belief state to the plurality of candidate policy actions. In some examples, the set of current parameter values is determined using reinforcement learning techniques prior to receiving the user utterance at block 1002.

Determining the plurality of candidate policy actions using the belief state can be advantageous because it enables the plurality of candidate policy actions to be determined using a larger and more comprehensive knowledge base. Specifically, the belief state incorporates information from past and current observations as well as uncertainties for one or more possible user intents. Using the belief state to determine the plurality of candidate policy actions can improve the relevancy and accuracy of the determined candidate policy actions to the user's actual desired goal. As a result, the operability of the electronic device can be enhanced by allowing for better interpretation of speech and other forms of natural language inputs. Specifically, the electronic device can be able to operate with greater accuracy and reliability when identifying and performing tasks in response to user requests.

At block 1012, a policy action is selected from the plurality of candidate policy actions (e.g., using policy decision processing module 770 and/or policy models 772). Specifically, the policy action is selected based on the belief state of block 1008 and a policy model (e.g., policy models 772). The selected policy action corresponds to a user intent of the one or more user intents represented by the belief state. In some examples, a probability distribution over the plurality of candidate policy actions (e.g., from block 1010) for the belief state is determined using the policy model. More specifically, the set of current parameter values of the policy model (including parameter values associated with the selected policy action) is used to determine the probability distribution over the plurality of candidate policy actions for the belief state. For each candidate policy action, the probability distribution includes the probability that the respective candidate policy action is the correct policy action to perform given the belief state. In some examples, selecting the policy action at block 1012 includes selecting the policy action with the highest probability value among the plurality of candidate policy actions.

In some examples, reinforcement learning techniques are applied to select the policy action. In some examples, the belief state and the policy model are implemented using POMDPs. In these examples, the policy action is selected from the plurality of candidate policy actions by solving the POMDPs. Specifically, a reward function (e.g. Q-function for Q-learning) is applied to each candidate policy action and the policy action that is predicted to maximize the reward function (e.g., the total reward over the entire dialogue) based on the belief state is selected. In some examples, the reward function is based on the current set of parameter values of the policy model. Thus, in some examples, the policy action that is selected at block 1012 depends on the current set of parameter values of the policy model.

The selected policy action can be one of several types of policy actions. Several exemplary types of policy actions are described below. It should be recognized that the plurality of candidate policy actions determined at block 1010 can include any combination of the types of exemplary policy actions described below.

In some examples, the selected policy action includes prompting a user to provide a value for a property of the user intent that corresponds to the selected policy action. For example, the selected policy action can be based on the belief state for the user utterance "I want a meeting at 3pm." In this example, the selected policy action can include generating and outputting the dialogue "Which day do you want to create your calendar event?" The dialogue thus prompts the user to provide a value for the "day" property of the user intent "create calendar event."

In some examples, the selected policy action includes proposing a value for a property of the user intent that corresponds to the selected policy action and prompting the user to confirm whether the proposed value for the property is correct. For example, the selected policy action can include generating and outputting the dialogue "Did you mean the 23^{rd} of May?" In this example, the dialogue proposes the value "23" for the "day" property of the user intent "create calendar event" and prompts the user to confirm that this value is correct.

In some examples, the selected policy action includes presenting output that specifies one or more actions to be performed and that prompts a user to confirm whether to perform the one or more specified actions. For example, the selected policy action can include generating and outputting the dialogue "I set up your meeting for 3pm today, shall I schedule it?" In this example, the dialogue specifies the action of scheduling a meeting for 3pm today and prompts the user to confirm whether to perform this action.

In some examples, the selected policy action includes performing one or more actions represented in the belief state and outputting dialogue confirming that the one or more actions have been performed. For example, the selected policy action can include creating a meeting calendar event for 3pm today and generating and outputting the dialogue "OK, I've scheduled your event."

In some examples, the selected policy action includes obtaining results from executing one or more actions and presenting a summary of the results. For example, the selected policy action can include searching for a calendar event that is scheduled for 3pm today and displaying a summary of the results from the search. In addition, the selected policy action can include generating and outputting the dialogue "You have only one appointment at 3pm, here it is."

In some examples, the selected policy action includes presenting dialogue that instructs a user on how to operate a digital assistant of the electronic device using dialogue input. The dialogue instructions can be based on one or more missing property values in the user utterance. For example, the selected policy action can include generating and outputting the dialogue "When creating a calendar event, you can specify the date, time, and attendees for the event."

At block 1014, the selected policy action is performed (e.g., using task flow processing module 736 and/or dialogue flow processing module 734), wherein performing the selected policy action includes outputting results of the policy action for presentation. The outputted results are responsive to the user utterance. In some examples, performing the selected policy action includes generating a suitable output dialogue and presenting the output dialogue to the user.

At block 1016, a success score for the performed policy action is determined (e.g., using feedback processing module 904). Block 1016 is performed after block 1014. The success score represents the degree that the performed policy action concurs with the user's actual desired goal or intent for the user utterance. In some examples, the success score is a reward score for reinforcement learning that defines the reward for being in the determined belief state of block 1008 and selecting the policy action of block 1012. Block 1016 includes determining whether one of a plurality of types of user input is detected after performing the selected policy action. The success score is then determined based on whether one of a plurality of types of user input is detected after performing the policy action.

The plurality of types of user input are each implicit types of user feedback received in response to the performed policy action. Process 1000 determines whether implicit types of user feedback are detected after the selected policy action is performed. A corresponding success score is then determined based on either a detected implicit user feedback or the absence of any detected implicit user feedback. Implicit user feedback refers to user feedback that does not expressly describe whether the user is satisfied or dissatisfied with the performed policy action. Thus, the plurality of types of user input do not include user input that explicitly specifies user satisfaction or dissatisfaction with the performed policy action. For example, user dialogue input such as "That's good," or "No, that's not what I want" would be explicit user feedback rather than implicit user feedback. Additionally, implicit user feedback is user input that is not responsive to a structure device query. For example, if, after performing the selected policy action, the digital assistant system provides the structured prompt "Has your goal been achieved?" or "Are you satisfied with the response provided," any user feedback that is responsive to such structured prompts would be explicit user feedback rather than implicit user feedback.

In some examples, a type of user input of the plurality of types of user input includes user input received at the device within a predetermined duration after performing the policy action. For example, if user input is detected within a predetermined duration, process 1000 can interpret the user input as indicating that the user is dissatisfied with the performed policy action and thus determine a lower success score (e.g., negative reward). Conversely, if no user input is received at the device within a predetermined duration after performing the policy action, process 1000 can interpret the absence of any user input as indicating that the user is satisfied with the performed policy action and thus determine a higher success score. In some examples, the user input includes any user input detected via a user interface of the device. For example, the user input includes the user selection of graphical user interface elements displayed on a touch screen (e.g., touch screen 212) of the device.

In some examples, a type of user input of the plurality of types of user input includes user input that invokes a digital assistant of the electronic device. User input that invokes the digital assistant refers to user input that causes the digital assistant system to begin receiving audio input via a microphone and automatically performing speech and language processing (e.g., speech recognition and natural language processing) on the audio input to determine one or more user intents and provide a suitable response. For instance, in one example, the performed policy action can include scheduling a calendar event at 3pm. After performing this policy action, user input that invokes the digital assistant is detected (e.g., within a predetermined duration after performing the policy action). In this example, process 1000 can interpret the user input as indicating that the user is dissatisfied with the performed policy action and thus determine a lower success score (e.g., negative reward).

In some examples, performing the selected policy action at block 1014 includes displaying results on a first user interface of a first application of the electronic device. In these examples, a type of user input of the plurality of types of user input can include user input that causes the electronic device to switch from displaying the first user interface of the first application to displaying a second user interface of a second application of the electronic device. In some examples, the performed policy action corresponds to a user intent that relates to the second application of the device. Specifically, the user intent can represent tasks that the second application of the device is capable of performing. To illustrate, in a specific example, performing the selected policy action can include displaying a digital assistant interface with a confirmation message that a calendar event was created for 5pm today. After displaying the digital assistant interface with the confirmation message, user input that causes the electronic device to switch from displaying the digital assistant interface to displaying a user interface of the calendar application is detected. Notably, the user intent (e.g., creating a calendar event) corresponding to the performed policy action relates to the calendar application. In this example, process 1000 can interpret the user input as indicating that the user is dissatisfied with the performed policy action and thus determine a lower success score (e.g., negative reward).

In some examples, a type of user input of the plurality of types of user input includes user input that enters a value into an input field of a user interface. The input field can correspond to a property of the user intent for the performed policy action. For instance, in a specific example, the performed policy action includes creating a calendar event at 5pm today. In this example, after the policy action is performed, user input that causes the device to navigate to the created event in the calendar application and that causes the value "meeting" to be entered into the "subject" input field can be received. Notably, the performed policy action corresponds to the "create calendar event" user intent and thus, the "subject" input field corresponds to a respective property (e.g., the "subject" property) of this user intent. In this example, process 1000 can interpret the user input as indicating that the user is dissatisfied with the performed policy action and thus determine a lower success score (e.g., negative reward).

In some examples, the results of the policy action include a value for a property of a corresponding user intent. In these examples, a type of user input of the plurality of types of user input includes user input that provides a second value for the property of the one or more user intents. For instance, in a specific example, the performed policy action includes creating a calendar event at 5pm today and outputting dialogue confirming the creation of the calendar event. Notably, "5pm" is a value for the "start time" property of the "create calendar event" user intent. In this example, after the policy action is performed, user input that causes the value of the "start time" property to be modified from "5pm" to "3pm" can be detected. In this example, process 1000 can interpret this user input as indicating that the user is dissatisfied with the performed policy action and thus determine a lower success score (e.g., negative reward).

The success score of block 1016 can be determined in accordance with detecting, after performing the selected policy action, one or more of the exemplary types of user input, described above. It should be recognized that the success score can be determined in accordance with not detecting any of the plurality of types of user input after performing the selected policy action. For example, process 1000 can interpret the absence of any of the plurality of types of user input being detected as indicating that the user is satisfied with the performed policy action. In these examples, a higher success score (e.g., positive reward) is determined.

In a specific example, block 1016 includes determining whether, after performing the selected policy action, one or more properties of the performed action (e.g., day of calendar event) are modified by a user, or a second user utterance that matches the user utterance of block 1002 within a predetermined threshold is received. The predetermined threshold can be based on comparing acoustic or linguistic properties of the second user utterance and the user utterance of block 1002. In accordance with a determination that, after performing the selected policy action, one or more properties of the performed action are modified by a user, or a second user utterance that matches the user utterance of block 1002 within a predetermined threshold is received, a corresponding success score is determined. In this example, the determined success score can be a lower score (e.g., negative reward) indicating that the user is dissatisfied with the performed policy action.

Determining a success score for the policy action using implicit user feedback can be advantageous because it can enable the success score to be determined more objectively, which in turn can enable a more accurate and robust policy model to be produced. Specifically, it was found to be unexpectedly counterintuitive that implicit user feedback more accurately reflects whether the performed policy action coincides with the user's actual desired goal compared to explicit user feedback. Relying on implicit user feedback can thus improve the accuracy and reliability of the determined success score. Optimizing the policy model using a more accurate and reliable success score can result in a more accurate and robust policy model. This can enhance the operability of the digital assistant system by allowing for better interpretation of speech and other forms of natural language inputs. Specifically, the digital assistant system can utilize the more accurate and robust policy model to select policy actions that better reflect the user's desired goals. As a result, the digital assistant system can operate with greater accuracy and reliability when identifying and performing tasks in response to user requests.

At block 1018, the current set of parameter values of the policy model is modified (e.g., using the learning module 902) in accordance with the determined success score. For example, modifying the current set of parameter values of the policy model includes determining an updated set of parameter values for the policy model. In some examples, the current set of parameter values of the policy model are modified in accordance with the determined success score using unsupervised machine learning techniques rather than supervised machine learning techniques. In a specific example, the current set of parameter values of the policy model is modified using reinforcement learning techniques in accordance with the determined success score. In this example, the success score for the performed policy action is used as a reward for the reinforcement learning. Additional details on reinforcement learning can be found in R. S. Sutton and A. G. Barto, "Reinforcement Learning: An Introduction," MIT Press, 1999.

In some examples, the success score is indicative of a negative reward. In these examples, modifying the current set of parameter values to determine an updated set of parameter values can be performed such that parameter values associated with the performed policy action are de-emphasized (e.g., weights decreased) with respect to parameter values associated with one or more other candidate policy actions that were not selected. More specifically, given the same belief state, process 1000 is less likely to select the performed policy action (relative to one or more other candidate policy actions) using the updated set of parameter values compared to using the current set of parameter values.

In some examples, the success score is indicative of a positive reward. In these examples, modifying the current set of parameter values to determine an updated set of parameter values can be performed such that parameter values associated with the performed policy action are increased in significance (e.g., weights increased) with respect to parameter values associated with one or more other candidate policy actions that were not selected. More specifically, given the same belief state, process 1000 is more likely to select the performed policy action (relative to one or more other candidate policy actions) using the updated set of parameter values compared to using the current set of parameter values.

It should be recognized that the operations of process 1000 can be repeated one or more times in an iterative manner to optimize the set of parameter values of the policy model. For example, after modifying the current set of parameter values of the policy model to determine an updated set of parameter values at block 1018, a subsequent user utterance is received (block 1002). One or more second text representations of the subsequent user utterances are determined (block 1004). Based on the one or more second text representations of the subsequent user utterance, one or more second user intents corresponding to the subsequent user utterance are determined (block 1006). A second belief state for the one or more second user intents is determined (block 1008). In particular, the second belief state is determined from the first belief state and the one or more second user intents. A second plurality of candidate policy actions is determined (block 1010) for the second belief state. Based on the second belief state and the updated set of parameter values of the policy model, a second policy action is selected from the second plurality of candidate policy actions (block 1012). The second policy action is performed (block 1014). In some examples, the second policy action includes outputting results of the second policy action for presentation. It should be appreciated that if the second user utterance is identical to (or substantially similar to) the previous user utterance, the selected second policy action can be different from the previously selected policy action for the previous user utterance. Specifically, the outputted results of the second policy action can be different from the outputted results of the previous policy action. This result can occur because the second policy action and the previous policy action are selected using different sets of parameter values of the policy model. In particular, the second policy action is selected using the updated set of parameter values of the model. In some examples, a second success score for the performed second policy action is determined (block 1016). The previously updated set of parameter values of the policy model is modified in accordance with the second success score to determine a second updated set of parameter values. The policy model is thus further optimized based on the subsequent user utterance and the corresponding second success score.

In some examples, the operations of blocks 1002 through 1016 are performed multiple times to obtain a plurality of success scores. Each success score is for a respective previously performed policy action of a plurality of previously performed policy actions. Each previously performed policy action of the plurality of previously performed policy actions is determined (blocks 1010 and 1012) using a first set of parameter values of a policy model and performed (block 1014) to satisfy a respective predicted goal for a respective previous user utterance (block 1002) of a plurality of previous user utterances. Each success score of the plurality of success scores is determined (block 1016) based on whether one of a plurality of predetermined types of user input is detected after performing the respective previous policy action. The plurality of predetermined types of user input are each a type of user input other than a response to a structured device query. The plurality of success scores are collected and stored in the memory of the device. The plurality of success scores are then used to optimize the policy model. Specifically, using the plurality of success scores, the first set of parameter values of the policy model is updated to determine a second set of parameter values for the policy model. Subsequent policy actions can thus be determined and selected for subsequent user utterances using the second set of parameter values for the policy model.

The operations described above with reference to FIG. 10 are optionally implemented by components depicted in FIGS. 1-4, 6A-B, 7A-C, and 9. For example, the operations of process 1000 can be implemented by I/O processing module 728, STT processing module 730, natural language processing module 732, belief tracker processing module 766, belief models 768, policy decision processing module 770, policy models 772, learning module 902, and feedback processing module 904. It would be clear to a person having ordinary skill in the art how other processes are implemented based on the components depicted in FIGS. 1-4, 6A-B, 7A-C, and 9.

In accordance with some implementations, a computer-readable storage medium (e.g., a non-transitory computer-readable storage medium) is provided, the computer-readable storage medium storing one or more programs for execution by one or more processors of an electronic device, the one or more programs including instructions for performing any of the methods or processes described herein.

In accordance with some implementations, an electronic device (e.g., a portable electronic device) is provided that comprises means for performing any of the methods or processes described herein.

In accordance with some implementations, an electronic device (e.g., a portable electronic device) is provided that comprises a processing unit configured to perform any of the methods or processes described herein.

In accordance with some implementations, an electronic device (e.g., a portable electronic device) is provided that comprises one or more processors and memory storing one or more programs for execution by the one or more processors, the one or more programs including instructions for performing any of the methods or processes described herein.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as described, wherein the scope of the invention is defined by the appended claims.

## Claims

1. A method comprising:
at an electronic device having one or more processors and memory:
receiving (1002) a user utterance;
determining (1004), based on a text representation of the user utterance, one or more user intents corresponding to the user utterance;
determining (1006) a belief state for the one or more user intents;
mapping, based on a policy model, the belief state to a plurality of candidate policy actions;
selecting (1012), based on the belief state and the policy model, a policy action from the plurality of candidate policy actions;
performing (1014) the policy action, including outputting results of the policy action for presentation;
determining (1016) a success score for the policy action based on whether one of a plurality of types of user input is detected after performing the policy action, wherein the success score represents a degree that the performed policy action coincides with a user desired goal for the user utterance, and wherein the plurality of types of user input are each a type of user input other than a response to a structured device query; and
modifying (1018) a set of parameter values of the policy model in accordance with the determined success score,
wherein the user utterance is a current user utterance comprising user speech from one turn of a multi-turn dialogue conversation between a user and a digital assistant system,
wherein the belief state is determined based on a previous belief state which describes a state of the multi-turn dialogue prior to receiving the user utterance, and wherein
determining the belief state includes updating the previous belief state with current information and/or observations obtained based on the current user utterance.

2. The method of claim 1, wherein a first type of user input of the plurality of types of user input comprises a user input received at the device within a predetermined duration after outputting the results of the policy action.

3. The method of any of claims 1-2, wherein a second type of user input of the plurality of types of user input comprises a user input that invokes a digital assistant of the electronic device.

4. The method of any of claims 1-3, wherein:
outputting the results of the policy action for presentation comprises displaying the results on a first user interface of a first application of the device; and
a third type of user input of the plurality of types of user input comprises a user input that causes the device to switch from displaying the first user interface of the first application to displaying a second user interface of a second application of the device.

5. The method of claim 4, wherein:
the policy action corresponds to a first user intent of the one or more user intents;
the first user intent represents tasks that the second application of the device is capable of performing.

6. The method of any of claims 1-5, wherein:
the policy action corresponds to a second user intent of the one or more user intents; and
a fourth type of user input of the plurality of types of user input comprises a user input that enters a value into an input field of a third user interface, the input field representing a property of the second user intent.

7. The method of any of claims 1-6, wherein:
the results of the policy action include a value for a property of the one or more user intents; and
a fifth type of user input of the plurality of types of user input comprises a user input that provides a second value for the property of the one or more user intents.

8. The method of any of claims 1-7, wherein modifying the set of parameter values of the policy model comprises determining an updated set of parameter values for the policy model using reinforcement learning in accordance with the determined success score for the performed policy action.

9. The method of claim 8, wherein the determined success score is used as a reward for the reinforcement learning.

10. The method of any of claims 1-9, wherein selecting the policy action from the plurality of candidate policy actions comprises selecting the policy action of the plurality of candidate policy actions that maximizes, based on the belief state, a reward function of the policy model.

11. The method of any of claims 1-10, wherein:
the policy action corresponds to a third user intent of the one or more user intents; and
the policy action comprises prompting a user to provide a value for a property of the third user intent.

12. The method of any of claims 1-10, wherein:
the policy action corresponds to a fourth user intent of the one or more user intents; and
the policy action comprises proposing a value for a property of the fourth user intent and prompting a user to confirm whether the proposed value for the property of the fourth user intent is correct.

13. The method of any of claims 1-12, further comprising, after modifying the set of parameter values of the policy model:
receiving a second user utterance;
determining, based on a second text representation of the second user utterance, one or more second user intents corresponding to the second user utterance, the second text representation identical to the first text representation;
determining a second belief state for the one or more second user intents, wherein the second belief state corresponds to a second plurality of candidate policy actions;
selecting, based on the second belief state and the modified set of parameter values of the policy model, a second policy action from the second plurality of candidate policy actions; and
performing the second policy action, including outputting results of the second policy action for presentation, wherein the outputted results of the second policy action are different from the outputted results of the policy action.

14. An electronic device, comprising:
one or more processors;
a memory; and
one or more programs, wherein the one or more programs are stored in the memory and configured to be executed by the one or more processors, the one or more programs including instructions for performing any of the methods of claims 1-13.

15. A computer readable storage medium storing one or more programs, the one or more programs comprising instructions, which when executed by one or more processors of an electronic device, cause the electronic device to perform any of the methods of claims 1-13.

## Patentansprüche

1. Verfahren umfassend:
bei einer elektronischen Vorrichtung mit einem oder mehreren Prozessoren und einem Speicher:
Empfangen (1002) einer Benutzeräußerung;
basierend auf einer Textdarstellung der Benutzeräußerung, Bestimmen (1004) einer oder mehrerer Benutzerabsichten entsprechend der Benutzeräußerung; Bestimmen (1006) eines Annahmezustands für die eine oder mehreren Benutzerabsichten;
basierend auf einem Richtlinienmodell, Zuordnen des Annahmezustands zu einer Vielzahl von Kandidaten-Richtlinienaktionen;
basierend auf dem Annahmezustand und dem Richtlinienmodell, Auswählen (1012) einer Richtlinienaktion aus der Vielzahl von Kandidaten-Richtlinienaktionen;
Durchführen (1014) der Richtlinienaktion, einschließlich des Ausgebens von Ergebnissen der Richtlinienaktion zur Darstellung;
Bestimmen (1016) einer Erfolgsbewertung für die Richtlinienaktion basierend darauf, ob einer aus einer Vielzahl von Benutzereingabetypen nach dem Durchführen der Richtlinienaktion erfasst wird, wobei die Erfolgsbewertung einen Grad darstellt, in dem die durchgeführte Richtlinienaktion mit einem vom Benutzer gewünschten Ziel für die Benutzeräußerung übereinstimmt, und wobei die Vielzahl von Benutzereingabetypen jeweils ein anderer Benutzereingabetyp als eine Reaktion auf eine strukturierte Vorrichtungsabfrage ist; und
Modifizieren (1018) eines Satzes von Parameterwerten des Richtlinienmodells gemäß der bestimmten Erfolgsbewertung,
wobei die Benutzeräußerung eine aktuelle Benutzeräußerung ist, die eine Benutzersprache von einer Wendung einer Multi-Turn-Dialogkonversation zwischen einem Benutzer und einem digitalen Assistenzsystem umfasst, wobei der Annahmezustand basierend auf einem vorherigen Annahmezustand bestimmt wird, der einen Zustand des Multi-Turn-Dialogs vor dem Empfangen der Benutzeräußerung beschreibt, und wobei das Bestimmen des Annahmezustands das Aktualisieren des vorherigen Annahmezustands mit aktuellen Informationen und/oder Beobachtungen beinhaltet, die basierend auf der aktuellen Benutzeräußerung erhalten worden sind.

2. Verfahren nach Anspruch 1, wobei ein erster Benutzereingabetyp der Vielzahl von Benutzereingabetypen eine Benutzereingabe umfasst, die an der Vorrichtung innerhalb einer vorbestimmten Dauer nach dem Ausgeben der Ergebnisse der Richtlinienaktion empfangen wird.

3. Verfahren nach einem der Ansprüche 1 bis 2, wobei ein zweiter Benutzereingabetyp der Vielzahl von Benutzereingabetypen eine einen digitalen Assistenten der elektronischen Vorrichtung aufrufende Benutzereingabe umfasst.

4. Verfahren nach einem der Ansprüche 1 bis 3, wobei:
das Ausgeben der Ergebnisse der Richtlinienaktion zur Darstellung das Anzeigen der Ergebnisse auf einer ersten Benutzerschnittstelle einer ersten Applikation der Vorrichtung umfasst; und
ein dritter Benutzereingabetyp der Vielzahl von Benutzereingabetypen eine Benutzereingabe umfasst, die bewirkt, dass die Vorrichtung von dem Anzeigen der ersten Benutzerschnittstelle der ersten Applikation zum Anzeigen einer zweiten Benutzerschnittstelle einer zweiten Applikation der Vorrichtung umschaltet.

5. Verfahren nach Anspruch 4, wobei:
die Richtlinienaktion einer ersten Benutzerabsicht der einen oder mehreren Benutzerabsichten entspricht;
die erste Benutzerabsicht Aufgaben darstellt, die die zweite Applikation der Vorrichtung ausführen kann.

6. Verfahren nach einem der Ansprüche 1 bis 5, wobei:
die Richtlinienaktion einer zweiten Benutzerabsicht der einen oder mehreren Benutzerabsichten entspricht; und
ein vierter Benutzereingabetyp der Vielzahl von Benutzereingabetypen eine Benutzereingabe umfasst, die einen Wert in ein Eingabefeld einer dritten Benutzerschnittstelle eingibt, wobei das Eingabefeld eine Eigenschaft der zweiten Benutzerabsicht darstellt.

7. Verfahren nach einem der Ansprüche 1 bis 6, wobei:
die Ergebnisse der Richtlinienaktion einen Wert für eine Eigenschaft der einen oder mehreren Benutzerabsichten beinhaltet; und
ein fünfter Benutzereingabetyp der Vielzahl von Benutzereingabetypen eine Benutzereingabe umfasst, die einen zweiten Wert für die Eigenschaft der einen oder mehreren Benutzerabsichten bereitstellt.

8. Verfahren nach einem der Ansprüche 1 bis 7, wobei das Modifizieren des Satzes von Parameterwerten des Richtlinienmodells das Bestimmen eines aktualisierten Satzes von Parameterwerten für das Richtlinienmodell unter Verwendung eines Verstärkungslernens gemäß der bestimmten Erfolgsbewertung für die durchgeführte Richtlinienaktion umfasst.

9. Verfahren nach Anspruch 8, wobei die bestimmte Erfolgsbewertung als eine Belohnung für das Verstärkungslernen verwendet wird.

10. Verfahren nach einem der Ansprüche 1 bis 9, wobei das Auswählen der Richtlinienaktion aus der Vielzahl von Kandidaten-Richtlinienaktionen das Auswählen der Richtlinienaktion der Vielzahl von Kandidaten-Richtlinienaktionen umfasst, die basierend auf dem Annahmezustand eine Belohnungsfunktion des Richtlinienmodells maximiert.

11. Verfahren nach einem der Ansprüche 1 bis 10, wobei:
die Richtlinienaktion einer dritten Benutzerabsicht der einen oder mehreren Benutzerabsichten entspricht; und
die Richtlinienaktion das Auffordern eines Benutzers umfasst, einen Wert für eine Eigenschaft der dritten Benutzerabsicht bereitzustellen.

12. Verfahren nach einem der Ansprüche 1 bis 10, wobei:
die Richtlinienaktion einer vierten Benutzerabsicht der einen oder mehreren Benutzerabsichten entspricht; und
die Richtlinienaktion umfasst, einen Wert für eine Eigenschaft der vierten Benutzerabsicht vorzuschlagen und einen Benutzer aufzufordern, zu bestätigen, ob der vorgeschlagene Wert für die Eigenschaft der vierten Benutzerabsicht korrekt ist.

13. Verfahren nach einem der Ansprüche 1 bis 12, das nach dem Modifizieren des Satzes von Parameterwerten des Richtlinienmodells weiter umfasst:
Empfangen einer zweiten Benutzeräußerung;
basierend auf einer zweiten Textdarstellung der zweiten Benutzeräußerung, Bestimmen einer oder mehrerer zweiter Benutzerabsichten entsprechend der zweiten Benutzeräußerung, wobei die zweite Textdarstellung identisch mit der ersten Textdarstellung ist;
Bestimmen eines zweiten Annahmezustands für die eine oder mehreren zweiten Benutzerabsichten, wobei der zweite Annahmezustand einer zweiten Vielzahl von Kandidaten-Richtlinienaktionen entspricht;
basierend auf dem zweiten Annahmezustand und dem modifizierten Satz von Parameterwerten des Richtlinienmodells, Auswählen einer zweiten Richtlinienaktion aus der zweiten Vielzahl von Kandidaten-Richtlinienaktionen; und Durchführen der zweiten Richtlinienaktion, einschließlich des Ausgebens von Ergebnissen der zweiten Richtlinienaktion zur Darstellung, wobei sich die ausgegebenen Ergebnisse der zweiten Richtlinienaktion von den ausgegebenen Ergebnissen der Richtlinienaktion unterscheiden.

14. Elektronische Vorrichtung, umfassend:
einen oder mehrere Prozessoren;
einen Speicher; und
ein oder mehrere Programme, wobei das eine oder die mehreren Programme in dem Speicher gespeichert und dafür konfiguriert sind, von dem einen oder den mehreren Prozessoren ausgeführt zu werden, wobei das eine oder die mehreren Programme Anweisungen zur Durchführung eines der Verfahren nach den Ansprüchen 1 bis 13 enthalten.

15. Computerlesbares Speichermedium, das ein oder mehrere Programme speichert, wobei das eine oder die mehreren Programme Anweisungen umfassen, die beim Ausführen durch einen oder mehrere Prozessoren einer elektronischen Vorrichtung die elektronische Vorrichtung dazu veranlassen, eines der Verfahren nach einem der Ansprüche 1 bis 13 auszuführen.

## Revendications

1. Procédé comprenant :
au niveau d'un dispositif électronique ayant un ou plusieurs processeurs et une mémoire :
la réception (1002) d'un énoncé d'utilisateur ;
la détermination (1004), sur la base d'une ou de plusieurs représentations de texte de l'énoncé d'utilisateur, d'une ou de plusieurs intentions d'utilisateur correspondant à l'énoncé d'utilisateur ;
la détermination (1006) d'un état de croyance pour la ou les intentions d'utilisateur ;
le mappage, sur la base d'un modèle de stratégie, de l'état de croyance à une pluralité d'actions de stratégie candidates ;
la sélection (1012), sur la base de l'état de croyance et du modèle de stratégie, d'une action de stratégie de la pluralité d'actions de stratégie candidates ;
l'exécution (1014) de l'action de stratégie, comprenant la sortie des résultats de l'action de stratégie pour la présentation ;
la détermination (1016) d'un score de réussite pour l'action de stratégie sur la base du fait que l'un d'une pluralité de types d'entrée d'utilisateur est détecté après l'exécution de l'action de stratégie, le score de réussite représentant un degré selon lequel l'action de stratégie effectuée coïncide avec un objectif d'utilisateur souhaité pour l'énoncé d'utilisateur, et la pluralité de types d'entrée d'utilisateur étant chacun un type d'entrée d'utilisateur autre qu'une réponse à une interrogation de dispositif structuré ; et
la modification (1018) d'un ensemble de valeurs de paramètres du modèle de stratégie conformément au score de réussite déterminé,
dans lequel l'énoncé d'utilisateur est un énoncé d'utilisateur actuel comprenant une parole d'utilisateur à partir d'un tour d'une conversation de dialogue à plusieurs tours entre un utilisateur et un système d'assistant numérique, l'état de croyance étant déterminé sur la base d'un état de croyance précédent qui décrit un état du dialogue à plusieurs tours avant la réception de l'énoncé d'utilisateur, et dans lequel la détermination de l'état de croyance comprend la mise à jour de l'état de croyance précédent avec des informations actuelles et / ou des observations obtenues sur la base de l'énoncé d'utilisateur actuel.

2. Procédé selon la revendication 1, dans lequel un premier type d'entrée d'utilisateur de la pluralité de types d'entrée d'utilisateur comprend une entrée d'utilisateur reçue au niveau du dispositif pendant une durée prédéterminée après la sortie des résultats de l'action de stratégie.

3. Procédé selon l'une quelconque des revendications 1 à 2, dans lequel un deuxième type d'entrée d'utilisateur de la pluralité de types d'entrée d'utilisateur comprend une entrée d'utilisateur qui appelle un assistant numérique du dispositif électronique.

4. Procédé selon l'une quelconque des revendications 1 à 3, dans lequel :
la sortie des résultats de l'action de stratégie pour la présentation comprend l'affichage des résultats sur une première interface utilisateur d'une première application du dispositif ; et
un troisième type d'entrée d'utilisateur de la pluralité de types d'entrée d'utilisateur comprend une entrée d'utilisateur qui amène le dispositif à passer de l'affichage de la première interface utilisateur de la première application à l'affichage d'une deuxième interface utilisateur d'une deuxième application du dispositif.

5. Procédé selon la revendication 4, dans lequel :
l'action de stratégie correspond à une première intention d'utilisateur parmi la ou les intentions d'utilisateur ;
la première intention d'utilisateur représente des tâches que la deuxième application du dispositif est capable d'effectuer.

6. Procédé selon l'une quelconque des revendications 1 à 5, dans lequel :
l'action de stratégie correspond à une deuxième intention d'utilisateur parmi la ou les intentions d'utilisateur ; et
un quatrième type d'entrée d'utilisateur de la pluralité de types d'entrée d'utilisateur comprend une entrée d'utilisateur qui entre une valeur dans un champ d'entrée d'une troisième interface utilisateur, le champ d'entrée représentant une propriété de la deuxième intention d'utilisateur.

7. Procédé selon l'une quelconque des revendications 1 à 6, dans lequel :
les résultats de l'action de stratégie comprennent une valeur pour une propriété d'une ou plusieurs intentions d'utilisateur ; et
un cinquième type d'entrée d'utilisateur de la pluralité de types d'entrée d'utilisateur comprend une entrée d'utilisateur qui fournit une deuxième valeur pour la propriété de la ou des intentions d'utilisateur.

8. Procédé selon l'une quelconque des revendications 1 à 7, dans lequel la modification de l'ensemble de valeurs de paramètres du modèle de stratégie comprend la détermination d'un ensemble mis à jour de valeurs de paramètres pour le modèle de stratégie en utilisant l'apprentissage de renforcement conformément au score de réussite déterminé pour l'action de stratégie effectuée.

9. Procédé selon la revendication 8, dans lequel le score de réussite déterminé est utilisé en tant que récompense pour l'apprentissage de renforcement.

10. Procédé selon l'une quelconque des revendications 1 à 9, dans lequel la sélection de l'action de stratégie de la pluralité d'actions de stratégie candidates comprend la sélection de l'action de stratégie de la pluralité d'actions de stratégie candidates qui maximise, sur la base de l'état de croyance, une fonction de récompense du modèle de stratégie.

11. Procédé selon l'une quelconque des revendications 1 à 10, dans lequel :
l'action de stratégie correspond à une troisième intention d'utilisateur de la ou des intentions d'utilisateur ; et
l'action de stratégie consiste à inviter un utilisateur à fournir une valeur pour une propriété de la troisième intention d'utilisateur.

12. Procédé selon l'une quelconque des revendications 1 à 10, dans lequel :
l'action de stratégie correspond à une quatrième intention d'utilisateur de la ou des intentions d'utilisateur ; et
l'action de stratégie consiste à proposer une valeur pour une propriété de la quatrième intention d'utilisateur et à inviter un utilisateur à confirmer si la valeur proposée pour la propriété de la quatrième intention d'utilisateur est correcte.

13. Procédé selon l'une quelconque des revendications 1 à 12, comprenant en outre, après la modification de l'ensemble de valeurs de paramètres du modèle de stratégie :
la réception d'un deuxième énoncé d'utilisateur ;
la détermination, sur la base d'une deuxième représentation de texte du deuxième énoncé d'utilisateur, d'une ou de plusieurs deuxièmes intentions d'utilisateur correspondant au deuxième énoncé d'utilisateur, la deuxième représentation de texte étant identique à la première représentation de texte ;
déterminer un deuxième état de croyance pour la ou les deuxièmes intentions d'utilisateur, le deuxième état de croyance correspondant à une deuxième pluralité d'actions de stratégie candidates ;
la sélection, sur la base du deuxième état de croyance et de l'ensemble modifié de valeurs de paramètres du modèle de stratégie, d'une deuxième action de stratégie de la deuxième pluralité d'actions de stratégie candidates ; et
l'exécution de la deuxième action de stratégie, comprenant la sortie des résultats de la deuxième action de stratégie pour la présentation, les résultats sortis de la deuxième action de stratégie étant différents des résultats sortis de l'action de stratégie.

14. Dispositif électronique, comprenant :
un ou plusieurs processeurs ;
une mémoire ; et
un ou plusieurs programmes, dans lesquels l'un ou plusieurs programmes sont stockés dans la mémoire et configurés pour être exécutés par l'un ou plusieurs processeurs, l'un ou plusieurs programmes comprenant des instructions pour la mise en oeuvre de l'un quelconque des procédés selon les revendications 1 à 13.

15. Support de stockage lisible par ordinateur, stockant un ou plusieurs programmes, le ou les programmes comprenant des instructions qui, lorsqu'elles sont exécutées par un ou plusieurs processeurs d'un dispositif électronique, amènent le dispositif électronique à réaliser l'un quelconque des procédés selon les revendications 1 à 13.
